# EUROPEAN PATENT APPLICATION

(11) **EP 4 600 305 A1**
(43) Date of publication of application: **13.08.2025**
(21) Application number: 23874706.7
(22) Date of filing: 26.09.2023
(51) Int. Cl.: C08L 71/00, C09D 171/00, C09K 3/18

(54) **FLUOROPOLYETHER GROUP-CONTAINING POLYMER COMPOSITION, COATING AGENT, ARTICLE, AND METHOD FOR MODIFYING SURFACE OF ARTICLE**

(30) Priority: 07.10.2022 JP 2022162016
(71) Applicant: SHIN-ETSU CHEMICAL CO., LTD., Tokyo 1000005 (JP)
(72) Inventor: UCHIDA, Takashi, Annaka-shi, Gunma 379-0224 (JP); SAKOH, Ryusuke, Annaka-shi, Gunma 379-0224 (JP)
(74) Representative: Ter Meer Steinmeister & Partner
(86) International application number: PCT/JP2023/034811
(87) International publication number: WO 2024/075578

(57) **Abstract**

Provided is a coating agent comprising a fluoropolyether group-containing polymer composition that contains, at a specific ratio: a polymer and/or a partial (hydrolyzed) condensate (I) thereof, the polymer having a fluorooxyalkyl group at one end thereof, and at least two reactive functional groups at the other end thereof; and a polymer and/or a partial (hydrolyzed) condensate (II) thereof, the polymer having a fluorooxyalkylene group in a molecule, and a reactive functional group bonded to both ends of the fluorooxyalkylene group via a linking group that does not have a polar group. By using the coating agent, a cured film can be formed that has excellent water and oil repellency, and abrasion durability, and that maintains high abrasion durability even after surface cleaning.

## Description

### TECHNICAL FIELD

The present invention relates to a composition including a fluoropolyether group-containing polymer (a compound having a fluorooxyalkyl group or a fluorooxyalkylene group in the molecule), more particularly a fluoropolyether group-containing polymer composition capable of forming a cured film excellent in water/oil repellency and abrasion resistance, and to a coating agent including the composition, an article having a layer including a cured product of the coating agent, and a method for modifying the surface of an article including a step of applying and curing the coating agent to form a layer.

### BACKGROUND ART

Recently, there is an accelerating shift to mount touch panels as the screen on mobile phones and other displays. Touch panels expose their screen to many chances of direct contact with a finger, cheek, or the like and are readily fouled with adherents like sebum. There is an annually increasing need for a technique that attains fingerprint proofness or easy stain removal on the display surface for better appearance or visibility. It is thus desired to develop a material capable of meeting these requirements. Prior art water/oil repellent layers have high water/oil repellency and easy stain wipe-off, but suffer from a problem that the antifouling performance deteriorates during service.

Fluoropolyether group-containing compounds have a very low surface free energy and thus generally exhibit such properties as water/oil repellency, chemical resistance, lubricating properties, release properties, and antifouling properties. By taking advantage of these properties, they have found wide use in industry, including water/oil-repellent antifouling agents for paper, textiles, and the like, lubricants for magnetic recording media, oil-repellent agents for precision instruments, releasing agents, cosmetic ingredients, and protective films. However, their properties mean at the same time that the compounds do not stick or adhere to other substrates; the compounds can be applied to the substrate surface but the resultant film will not adhere tightly.

Meanwhile, silane coupling agents are well known as materials that bond organic compounds to the surfaces of substrates, such as glass or fabrics, and are widely used as coating agents on the surfaces of various substrates. A silane coupling agent has an organic functional group and a reactive silyl group (typically a hydrolyzable silyl group, such as an alkoxysilyl group) in the molecule. In the presence of water, such as airborne moisture, the hydrolyzable silyl groups undergo self-condensation reaction to form a film. The film is durable and tough as a result of chemical and physical bonds of the hydrolyzable silyl groups with the surface of glass, a metal, or the like.

Based on the above fact, compositions are disclosed that include a fluoropolyether group-containing polymer which is obtained by introducing a hydrolyzable silyl group into a fluoropolyether group-containing compound and that can easily adhere tightly to the substrate surface and can form on the substrate surface a film with such properties as water/oil repellency, chemical resistance, lubricating properties, release properties, and antifouling properties (Patent Documents 1 to 6: JP-A 2008-534696, JP-A 2008-537557, JP-A 2012-072272, JP-A 2012-157856, JP-A 2013-136833, and JP-A 2015-199906).

Such compositions that include a fluoropolyether group-containing polymer obtained by introducing a hydrolyzable silyl group into a fluoropolyether group-containing compound give, when applied as a surface treatment on the surface of, for example, a glass substrate, a cured film (a thin antifouling coating layer) that excels in steel wool abrasion resistance and allows for highly smooth movement thereon. For thin antifouling coating layers on the surface of touch panel displays, importance has been given to the antifouling performance and also to the usability (smooth movement and smooth touch) during touch panel operation. Good usability is related to the lowness in coefficient of friction (Patent Document 6: JP-A 2015-199906).

However, it has been found that the compositions often do not fully exhibit their performance depending on the mass production process. Specifically, in particular, durability is sometimes deteriorated by the surface cleaning process performed to adjust the appearance after the application of a thin antifouling coating layer.

### PRIOR ART DOCUMENTS

### PATENT DOCUMENTS

| | |
|---|---|
| Patent Document 1: | JP-A 2008-534696 |
| Patent Document 2: | JP-A 2008-537557 |
| Patent Document 3: | JP-A 2012-072272 |
| Patent Document 4: | JP-A 2012-157856 |
| Patent Document 5: | JP-A 2013-136833 |
| Patent Document 6: | JP-A 2015-199906 |

### SUMMARY OF INVENTION

### TECHNICAL PROBLEM

The present invention has been made in view of the circumstances discussed above. It is therefore an object of the present invention to provide a fluoropolyether group-containing polymer composition capable of forming a cured film that is excellent in water/oil repellency and abrasion resistance and maintains high abrasion resistance even after surface cleaning; a coating agent including the composition; an article having a layer including a cured product of the coating agent; and a method for modifying the surface of an article that includes a step of applying and curing the coating agent to form a layer.

### SOLUTION TO PROBLEM

The present inventors carried out intensive studies directed at achieving the above object and have consequently found that the above fluoropolyether group-containing polymer composition may be constructed by a combination of specific proportions of two specific components (components (I) and (II)) described later that are fluoropolyether group-containing polymers and/or partial (hydrolyzed) condensates thereof; specifically, a coating agent that includes such a fluoropolyether group-containing polymer composition containing a combination of fluoropolyether group-containing polymers and/or partial (hydrolyzed) condensates thereof can form a cured film that excels in water/oil repellency and abrasion resistance and maintains high abrasion resistance even after surface cleaning. The present invention has been completed based on the finding.

Thus, the present invention provides the following fluoropolyether group-containing polymer compositions, coating agent, article, and method for modifying the surface of an article.
[1] A fluoropolyether group-containing polymer composition including:
   (I) at least one selected from fluoropolyether group-containing polymers represented by formulas (1) to (3) below and partial (hydrolyzed) condensates thereof: 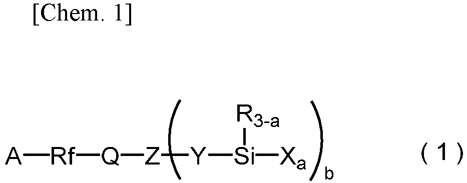 [wherein A is a fluorine atom or a monovalent fluorine-containing hydrocarbon group terminated with CF₃- or CF₂H- and optionally containing an oxygen atom; Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d independently with respect to each unit is an integer of 0 to 5; p, q, r, s, t, and u are each independently an integer of 0 to 200, the sum of p, q, r, s, t, and u is an integer of 1 to 250, each of the units indicated therewith may have linear or branched, and the individual repeating units in the parentheses with p, q, r, s, t, and u are optionally bonded randomly); Q is a single bond or a divalent organic group; Z is a trivalent to octavalent group; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; a is 2 or 3 independently with respect to each unit bonded to the silicon atom; and b is an integer of 2 to 7], 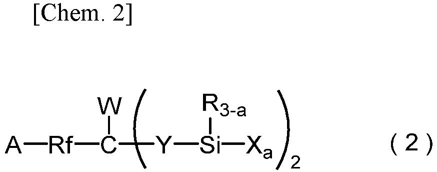 [wherein A, Rf, Y, R, X, and a are the same as defined above; W is a hydrogen atom or -OV; and V is a hydrogen atom, a C1-C10 monovalent hydrocarbon group, or a monovalent group represented by formula (2a) below: 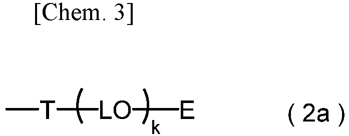 [wherein T is a single bond or a divalent group; L independently at each occurrence is a C1-C4 divalent hydrocarbon group; k is an integer of 0 to 20; and E is a C1-C6 monovalent hydrocarbon group or is a monovalent hydroxyl-containing silyl group-containing group or hydrolyzable silyl group-containing group represented by formula (2b) below: 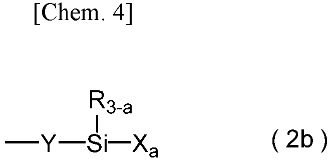 (wherein Y, R, X, and a are the same as defined above)]], 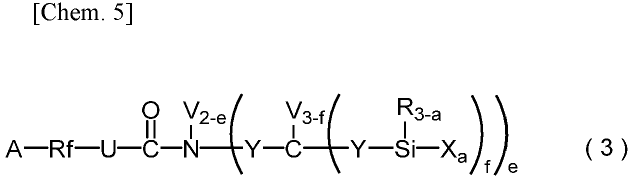 [wherein A, Rf, V, Y, R, X, and a are the same as defined above; the plurality of V and the plurality of Y are each the same as or different from one another; U is a single bond or a C2-C15 divalent hydrocarbon group optionally having an ether bond; e is 1 or 2; f is an integer of 1 to 3 independently with respect to each unit bonded to the carbon atom; and the molecule contains two or more hydroxyl-containing silyl groups or hydrolyzable silyl groups]; and
   (II) a fluoropolyether group-containing polymer represented by formula (4) below and/or a partial (hydrolyzed) condensate thereof: 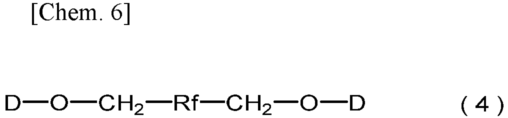 (wherein Rf is the same as defined above; and D independently at each occurrence is a monovalent group terminated with a hydroxyl-containing silyl group or a hydrolyzable silyl group and having no polar groups),
      the content of the component (I) in the total of the component (I) and the component (II) being 55 to 85 wt%.
[2] The fluoropolyether group-containing polymer composition according to [1], wherein in formula (4), D is represented by formula (4a) below: 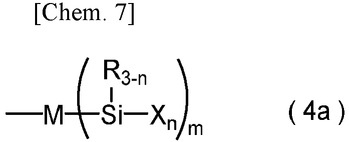 (wherein R and X are the same as defined above; M is a divalent to hexavalent hydrocarbon group optionally having a silicon atom and/or a siloxane bond; m is an integer of 1 to 5; and n is an integer of 1 to 3 independently with respect to each unit bonded to the silicon atom).
[3] The fluoropolyether group-containing polymer composition according to any one of [1] and [2], wherein in formulas (1) to (4), Rf is selected from polymers represented by formulas below:

   [Chem. 8] -C_{d'}F_{2d'}-O-(C₂F₄O)_{q'}-C_{d'}F_{2d'}- -C_{d'}F_{2d'}-O-(C₃F₆O)_{r'}-C_{d'}F_{2d'}- -C_{d'}F_{2d'}-O-(CF₂O)_{p'}(C₂F₄O)_{q'}-C_{d'}F_{2d'}- -C_{d'}F_{2d'}-O-(C₂F₄O)_{q'}(C₄F₈O)_{s'}-C_{d'}F_{2d'}- -C_{d'}F_{2d'}-O-(CF₂O)_{p'}(C₂F₄O)_{q'}(C₃F₆O)_{r'}-C_{d'}F_{2d'}- -C_{d'}F_{2d'}-O-(C₂F₄O)_{q'}(C₄F₈O)_{s'}(C₆F₁₂O)_{u'}-C_{d'}F_{2d'}- -C_{d'}F_{2d'}-O-(CF₂O)_{p'}(C₂F₄O)_{q'}(C₃F₆O)_{r'}(C₅F₁₀O)_{t'}-C_{d'}F_{2d'}- -C_{d'}F_{2d'}-O-(CF₂O)_{p'}(C₂F₄O)_{q'}(C₃F₆O)_{r'}(C₄F₈O)_{s'}(C₅F₁₀O)_{t'}(C₆F₁₂O)_{u'}-C_{d'}F_{2d'}-

   (wherein p', q', r', s', t', and u' are each an integer of 1 to 200, the sum of p', q', r', s', t', and u' is 10 to 250, and each of the units indicated therewith has linear; the individual repeating units in the parentheses with p', q', r', s', t', and u' are optionally bonded randomly; and d' independently with respect to each unit is an integer of 0 to 5 and each of these units has linear).
[4] The fluoropolyether group-containing polymer composition according to any one of [1] to [3], wherein in formula (1), Q is a C1-C15 unsubstituted or substituted, divalent hydrocarbon group optionally containing one or more bonds selected from the group consisting of amide bonds, ether bonds, ester bonds, sulfide bonds, urethane bonds, siloxane bonds, triazine bonds, diorganosilylene groups, silalkylene bonds, and silarylene bonds; and Z is a trivalent to octavalent group selected from a silicon atom, a nitrogen atom, a trivalent isocyanuric group, a trivalent triazine ring-containing group, and a trivalent to octavalent organopolysiloxane residue having a siloxane bond.
[5] The fluoropolyether group-containing polymer composition according to any one of [1] to [4], wherein in formula (2a), T is a single bond or is a C2-C20 divalent hydrocarbon group optionally containing one or more bonds selected from the group consisting of silicon atoms, siloxane bonds, silalkylene bonds, silarylene bonds, and diorganosilylene groups, a divalent siloxane bond, a silalkylene group, or a diorganosilylene group.
[6] The fluoropolyether group-containing polymer composition according to any one of [1] to [5], wherein in formulas (1), (2), (2b), and (3), X independently at each occurrence is a group selected from the group consisting of a hydroxyl group, a C1-C10 alkoxy group, a C2-C10 alkoxy-substituted alkoxy group, a C2-C10 acyloxy group, a C2-C10 alkenyloxy group, and a halogen group.
[7] The fluoropolyether group-containing polymer composition according to any one of [1] to [6], wherein the fluoropolyether group-containing polymer represented by formula (1) is selected from polymers represented by formulas below: 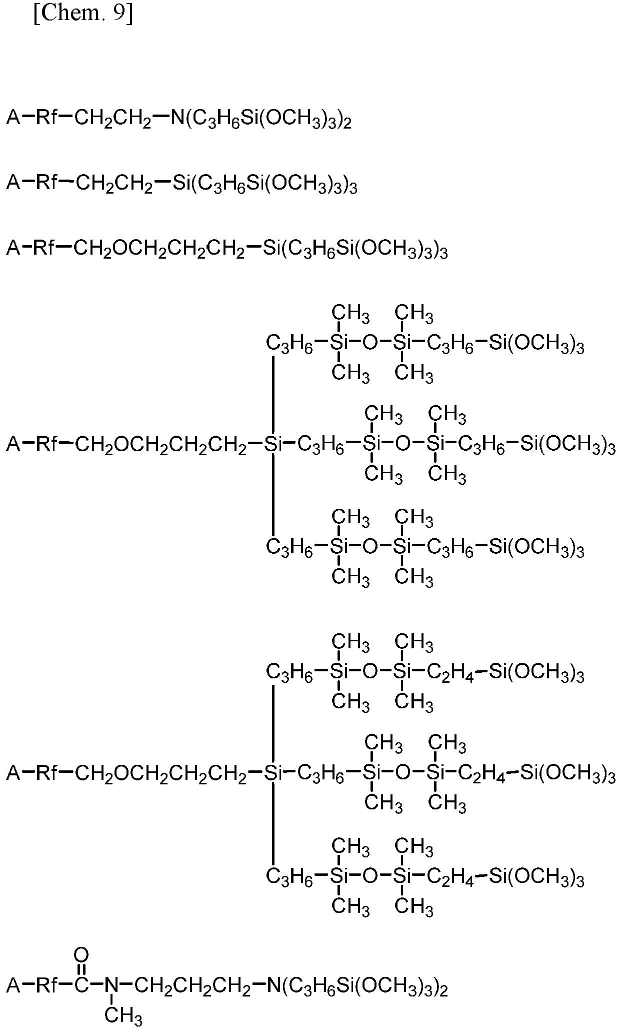 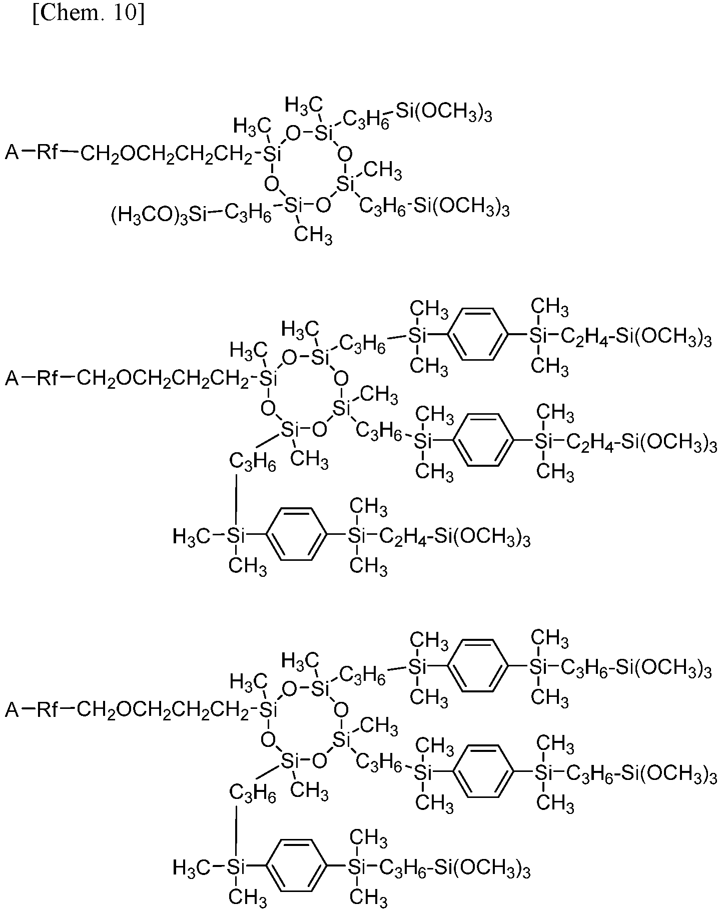 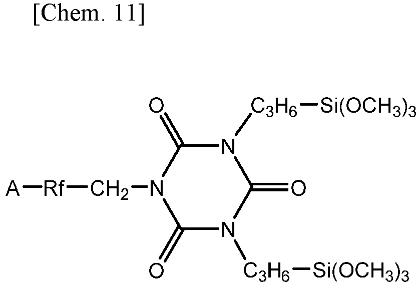 (wherein A and Rf are the same as defined hereinabove).
[8] The fluoropolyether group-containing polymer composition according to any one of [1] to [7], wherein the fluoropolyether group-containing polymer represented by formula (2) is selected from polymers represented by formulas below: 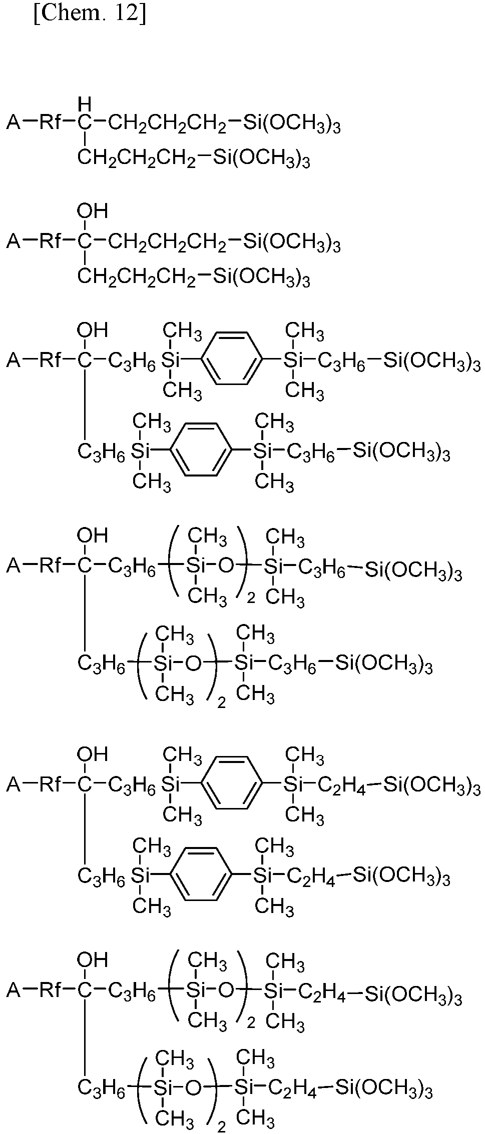 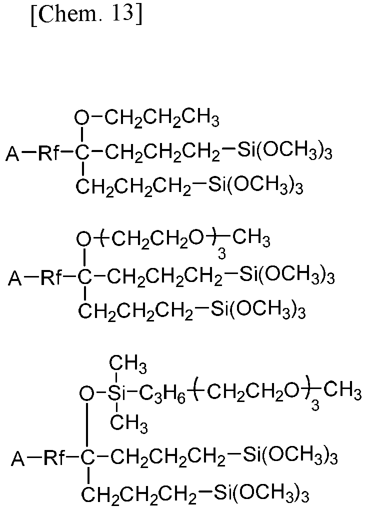 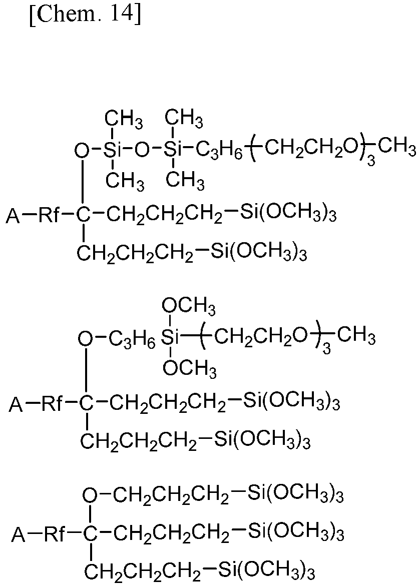 (wherein A and Rf are the same as defined hereinabove).
[9] The fluoropolyether group-containing polymer composition according to any one of [1] to [8], wherein the fluoropolyether group-containing polymer represented by formula (3) is selected from polymers represented by formulas below: 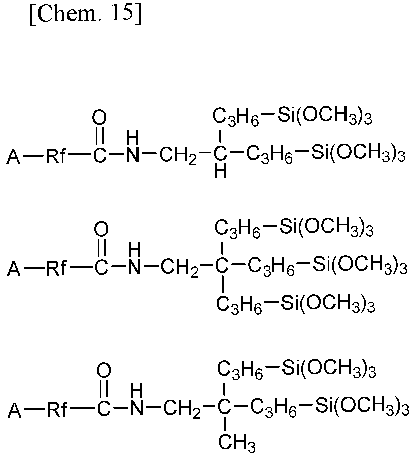 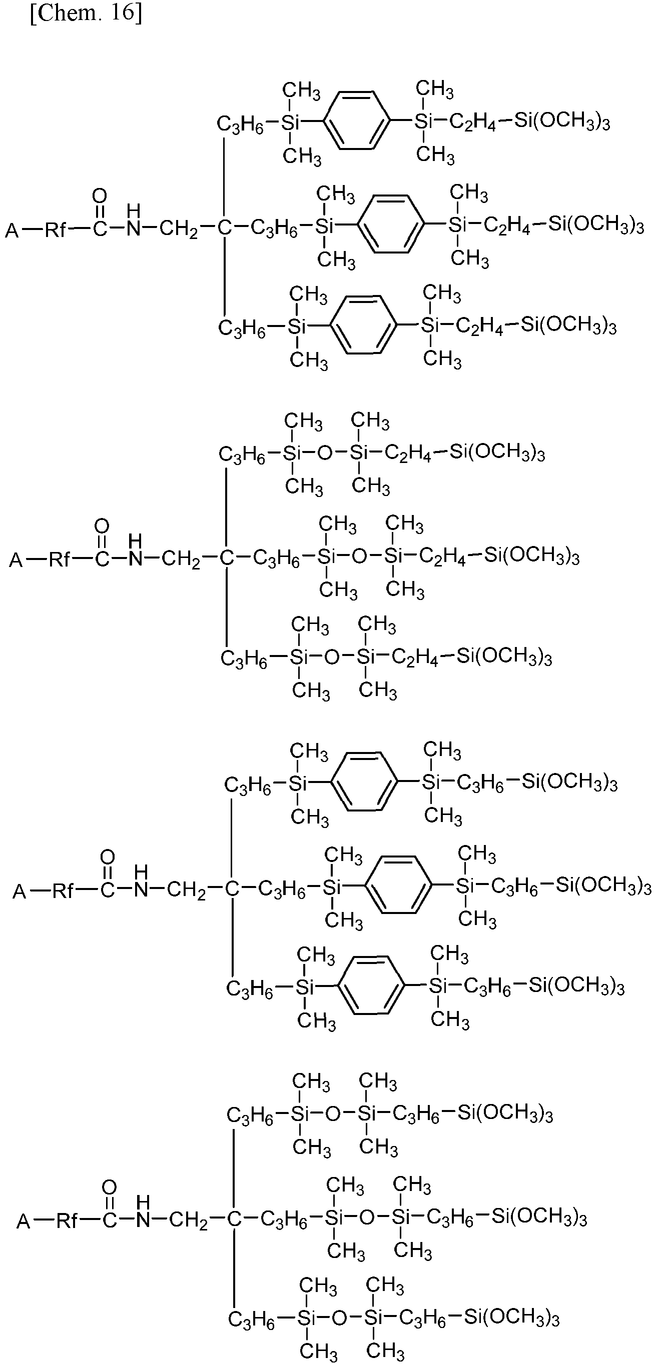 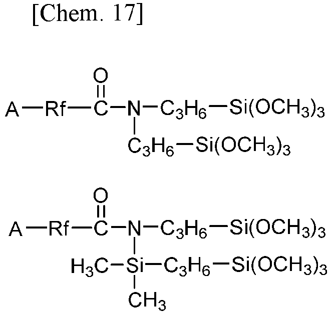 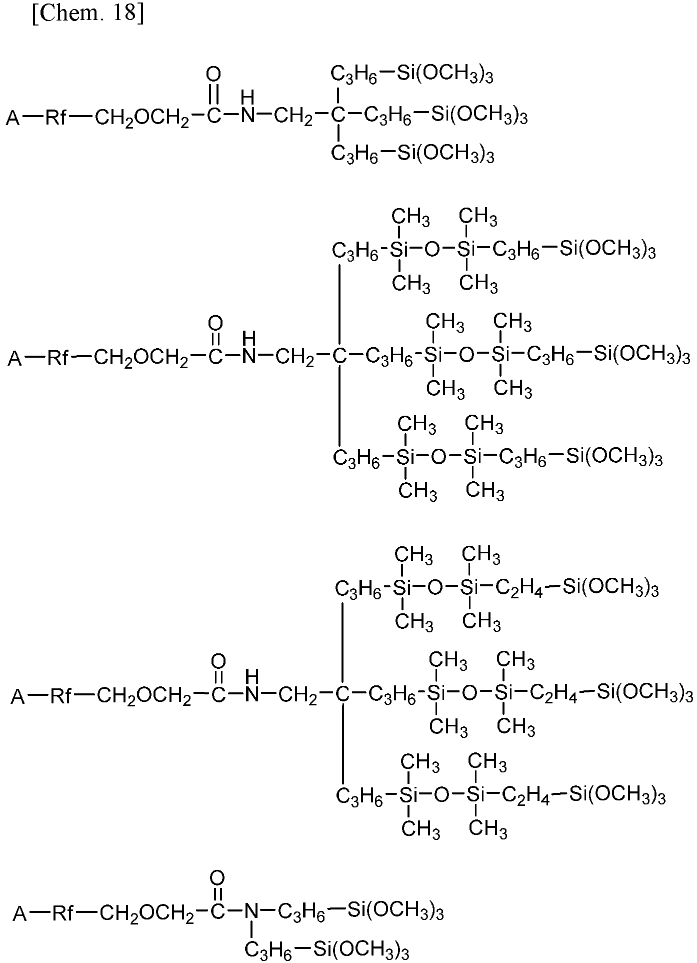 (wherein A and Rf are the same as defined hereinabove).
[10] The fluoropolyether group-containing polymer composition according to any one of [1] to [9], wherein the fluoropolyether group-containing polymer represented by formula (4) is selected from polymers represented by formulas below: 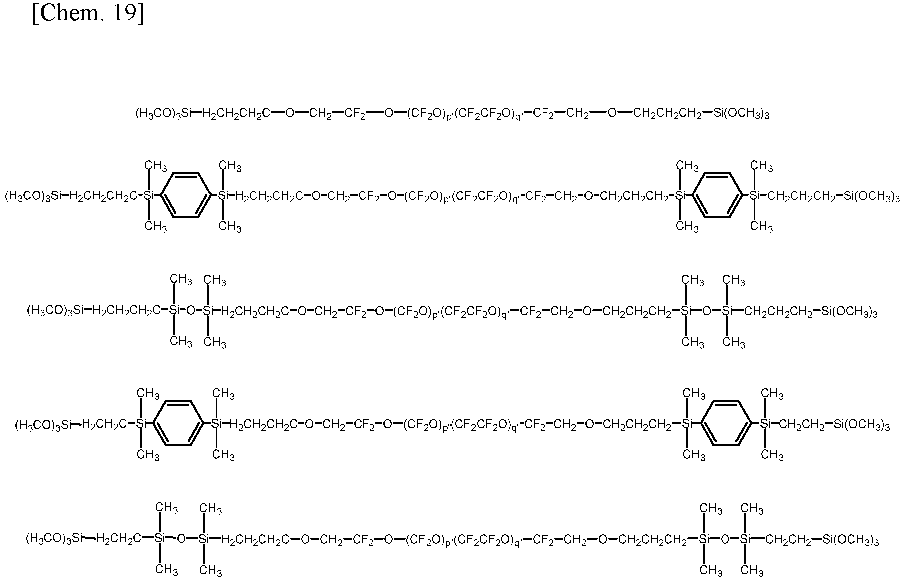 (wherein p" and q" are each an integer of 1 to 199; and the sum of p" and q" is 10 to 200).
[11] A coating agent including the fluoropolyether group-containing polymer composition described in any one of [1] to [10].
[12] An article having a layer including a cured product of the coating agent described in [11].
[13] The article according to [12], wherein the surface resists 2,500 or more abrasion resistance cycles under test conditions described below:

### [Abrasion resistance test conditions]

Evaluation of resistance to steel wool abrasion using a reciprocating abrasion tester

| | |
|---|---|
| Abrasive material: | steel wool #0000 (Bonstar) |
| Load: | 1 kgf |
| Reciprocating distance: | 40 mm |
| Reciprocating speed: | 60 reciprocations per minute |
| Test environment conditions: | 25°C, 50% relative humidity |

The contact angle with water of the friction-abraded portion is measured every 2,500 reciprocating friction cycles, and the number of reciprocating abrasion cycles up to which the contact angle with water is 100 degrees or more is taken as the number of abrasion resistance cycles.

[14] A method for modifying the surface of an article, including a step of applying a coating agent including the fluoropolyether group-containing polymer composition described in any one of [1] to [10] to part or the whole of the surface of an article by a dry process or a wet process, and curing the coating agent to form a layer.

### ADVANTAGEOUS EFFECTS OF INVENTION

The fluoropolyether group-containing polymer composition of the present invention can give a cured film that has excellent water/oil repellency and high abrasion resistance and maintains high abrasion resistance even after surface cleaning. Thus, an article (such as, for example, a portable electronic device terminal) that has a layer including a cured product of a coating agent containing the composition of the present invention exhibits water/oil repellency and high abrasion resistance.

### DESCRIPTION OF EMBODIMENTS

In the present invention, the term "partial (hydrolyzed) condensate" indicates a partial condensate or a partial hydrolyzed condensate.

A fluoropolyether group-containing polymer composition of the present invention includes two specific components (components (I) and (II)), which are fluoropolyether group-containing polymers and/or partial (hydrolyzed) condensates thereof, in a specific ratio. Regarding these components, the component (I) is a polymer having a fluorooxyalkyl group at one end and two or more reactive functional groups (hydroxyl-containing silyl groups or hydrolyzable silyl groups) at the other end, and/or a partial (hydrolyzed) condensate of the polymer; and the component (II) is a polymer having a fluorooxyalkylene group in the molecule and having reactive functional groups (hydroxyl-containing silyl groups or hydrolyzable silyl groups) bonded to both ends of the fluorooxyalkylene group via a linking group having no polar groups, and/or a partial (hydrolyzed) condensate of the polymer.

### [Components (I)]

In the fluoropolyether group-containing polymer composition of the present invention, the component (I) is at least one selected from fluoropolyether group-containing polymers represented by formulas (1) to (3) below and partial (hydrolyzed) condensates thereof: 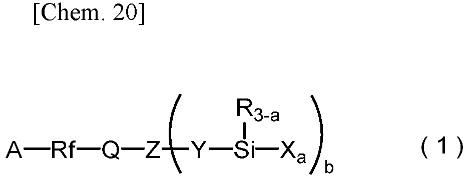 [wherein A is a fluorine atom or a monovalent fluorine-containing hydrocarbon group terminated with CF₃- or CF₂H- and optionally containing an oxygen atom; Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- (wherein d independently with respect to each unit is an integer of 0 to 5; p, q, r, s, t, and u are each independently an integer of 0 to 200, the sum of p, q, r, s, t, and u is an integer of 1 to 250, each of the units indicated therewith may have linear or branched, and the individual repeating units in the parentheses with p, q, r, s, t, and u are optionally bonded randomly); Q is a single bond or a divalent organic group; Z is a trivalent to octavalent group; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; a is 2 or 3 independently with respect to each unit bonded to the silicon atom; and b is an integer of 2 to 7], 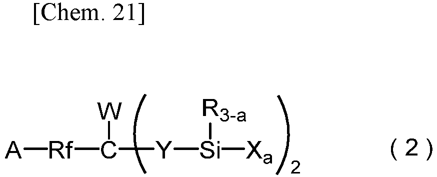 [wherein A, Rf, Y, R, X, and a are the same as defined above; W is a hydrogen atom or -OV; and V is a hydrogen atom, a C1-C10 monovalent hydrocarbon group, or a monovalent group represented by formula (2a) below: 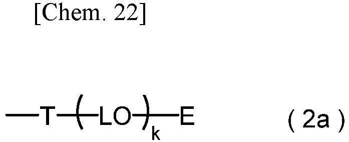 [wherein T is a single bond or a divalent group; L independently at each occurrence is a C1-C4 divalent hydrocarbon group; k is an integer of 0 to 20; and E is a C1-C6 monovalent hydrocarbon group or is a monovalent hydroxyl-containing silyl group-containing group or hydrolyzable silyl group-containing group represented by formula (2b) below: 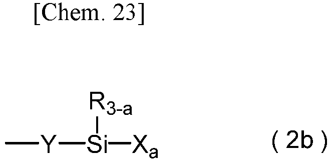 (wherein Y, R, X, and a are the same as defined above)]], 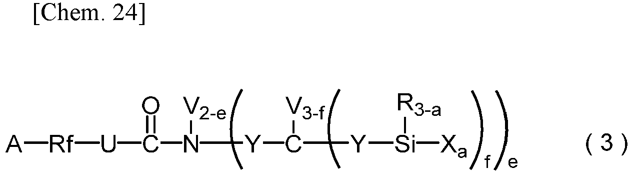 [wherein A, Rf, V, Y, R, X, and a are the same as defined above; the plurality of V and the plurality of Y are each the same as or different from one another; U is a single bond or a C2-C15 divalent hydrocarbon group optionally having an ether bond; e is 1 or 2; f is an integer of 1 to 3 independently with respect to each unit bonded to the carbon atom; and the molecule contains two or more hydroxyl-containing silyl groups or hydrolyzable silyl groups].

First, the fluoropolyether group-containing polymers represented by formula (1) below will be described.

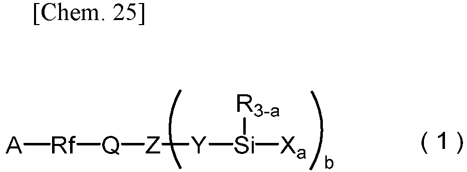

In formula (1), A is a fluorine atom or a monovalent fluorine-containing hydrocarbon group terminated with CF₃- or CF₂H- and optionally containing an oxygen atom. The monovalent fluorine-containing hydrocarbon group terminated with CF₃- or CF₂Hand optionally containing an oxygen atom is preferably a C1-C6 fluoroalkyl group, and particularly preferably one that terminates the polymer with CF₃- or CF₂H-.

Examples of the monovalent fluorine-containing hydrocarbon groups A terminated with CF₃- or CF₂H- and optionally containing an oxygen atom include the following groups.

[Chem. 26] CF₂H- CF₃- C₂F₅- C₃F₇- C₄F₉- CF₂HCF₂- C₃F₇OCFHCF₂OCH₂- CF₃OCFHCF₂OCH₂- CF₃OC₃F₆OCFHCF₂OCH₂-

A is preferably a fluorine atom.

In formula (1), Rf is a divalent polyfluorooxyalkylene structure (perfluoropolyether structure)-containing group represented by the following formula.

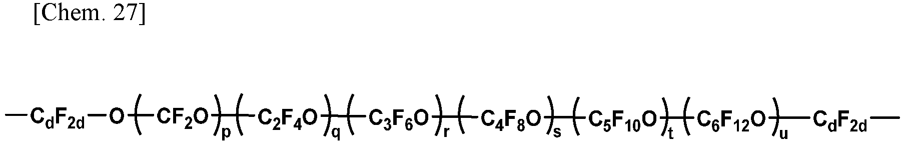

The letter d independently with respect to each unit is an integer of 0 to 5, preferably an integer of 0 to 2, and more preferably 0 or 1. The letters p, q, r, s, t, and u are each independently an integer of 0 to 200, preferably an integer of 0 to 150, more preferably an integer of 0 to 100, and still more preferably an integer of 0 to 60, and the sum of p, q, r, s, t, and u is an integer of 1 to 250, preferably an integer of 3 to 200, more preferably an integer of 7 to 140, and still more preferably an integer of 10 to 70. Each of the units indicated therewith may have linear or branched. The individual repeating units in the parentheses with p, q, r, s, t, and u are optionally bonded randomly.

Specific examples of the divalent polyfluorooxyalkylene structure-containing groups Rf include the following structures:

[Chem. 28] -C_{d'}F_{2d'}-O-(C₂F₄O)_{q'}-C_{d'}F_{2d'}- -C_{d'}F_{2d'}-O-(C₃F₆O)_{r'}-C_{d'}F_{2d'}- -C_{d'}F_{2d'}-O-(CF₂O)_{p'}(C₂F₄O)_{q'}-C_{d'}F_{2d'}- -C_{d'}F_{2d'}-O-(C₂F₄O)_{q'}(C₄F₈O)_{s'}-C_{d'}F_{2d'}- -C_{d'}F_{2d'}-O-(CF₂O)_{p'}(C₂F₄O)_{q'}(C₃F₆O)_{r'}-C_{d'}F_{2d'}- -C_{d'}F_{2d'}-O-(C₂F₄O)_{q'}(C₄F₈O)_{s'}(C₆F₁₂O)_{u'}-C_{d'}F_{2d'}- -C_{d'}F_{2d'}-O-(CF₂O)_{p'}(C₂F₄O)_{q'}(C₃F₆O)_{r'}(C₅F₁₀O)_{t'}-C_{d'}F_{2d'}- -C_{d'}F_{2d'}-O-(CF₂O)_{p'}(C₂F₄O)_{q'}(C₃F₆O)_{r'}(C₄F₈O)_{s'}(C₅F₁₀O)_{t'}(C₆F₁₂O)_{u'}-C_{d'}F_{2d'}-

(wherein p', q', r', s', t', and u' are each an integer of 1 to 200, the sum of p', q', r', s', t', and u' is 10 to 250, and each of the units indicated therewith may have each linear or branched and has preferably linear; the individual repeating units in the parentheses with p', q', r', s', t', and u' are optionally bonded randomly; and d' independently with respect to each unit is an integer of 0 to 5, and each of these units may have linear or branched and has preferably linear).

The following may be preferably used as Rf.

[Chem. 29] -CF₂-O-(CF₂O)_{p"}(CF₂CF₂O)_{q"}-CF₂-

(wherein p" and q" are each an integer of 1 to 199; the sum of p" and q" is an integer of 10 to 200; and the repeating units (CF₂CF₂O) and (CF₂O) in the formula are arranged randomly).

In formula (1), Q is a single bond or a divalent organic group. When Q is not a single bond, Q is preferably a C1-C15, preferably C2-C15, unsubstituted or substituted, divalent hydrocarbon group optionally containing one or more bonds selected from the group consisting of amide bonds (for example, unsubstituted amide bond, N-methyl-substituted amide bond, and N-phenyl-substituted amide bond), ether bonds, ester bonds, sulfide bonds, urethane bonds, siloxane bonds, triazine bonds, diorganosilylene groups (for example, dialkylsilylene groups, such as dimethylsilylene group), silalkylene bonds (for example, silethylene bond), and silarylene bonds (for example, silphenylene bond), and is preferably a C1-C12, preferably C2-C12, unsubstituted or fluorine-substituted, divalent hydrocarbon group optionally containing the above bond(s).

Here, examples of the silalkylene bonds and the silarylene bonds include those illustrated below: 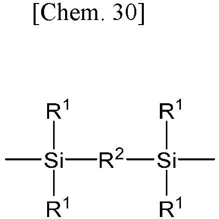 (wherein R¹ is a C1-C8, more preferably C1-C4, alkyl group, such as a methyl group, an ethyl group, a propyl group, or a butyl group, or a C6-C10 aryl group, such as a phenyl group, and the plurality of R¹ may be the same as or different from one another; and R² is a C1-C4 alkylene group, such as a methylene group, an ethylene group, or a propylene group (a trimethylene group or a methylethylene group), or a C6-C10 arylene group, such as a phenylene group).

Examples of Q other than a single bond include the following groups. In the structures below, it is preferable that the left valence bond be bonded to Rf and the right valence bond be bonded to Z.

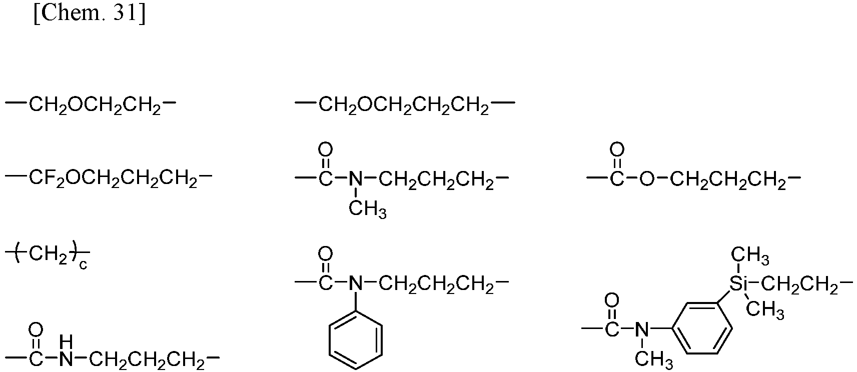

### (wherein c is an integer of 1 to 4.)

In formula (1), Z is a trivalent to octavalent group and is preferably a trivalent to octavalent, preferably trivalent or tetravalent group selected from a silicon atom, a nitrogen atom, a trivalent isocyanuric group, a trivalent triazine ring-containing group, and a trivalent to octavalent organopolysiloxane residue having a siloxane bond, preferably a linear, branched, or cyclic organopolysiloxane residue having 3 to 13 silicon atoms, more preferably 3 to 5 silicon atoms. Z may also include a silalkylene structure, such as a silethylene structure, in which two silicon atoms are bonded via an alkylene group, such as an ethylene group (that is, the silalkylene bond described hereinabove with respect to Q).

Here, examples of the trivalent to octavalent organopolysiloxane residues having a siloxane bond include those illustrated below: 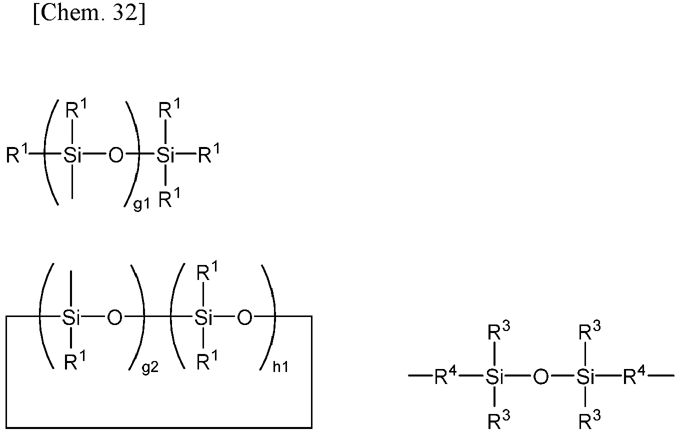
[wherein R¹ is the same as defined hereinabove; g1 is an integer of 3 to 12, preferably an integer of 3 to 8; g2 is an integer of 3 to 8, preferably 3 or 4; h1 is an integer of 0 to 8, preferably 0 or 1; g2 + h1 is an integer of 3 to 13, preferably an integer of 3 to 5; the individual repeating units in the parentheses with g2 and h1 are optionally bonded randomly; R³ independently at each occurrence is R¹ or a group represented by formula (6) below: 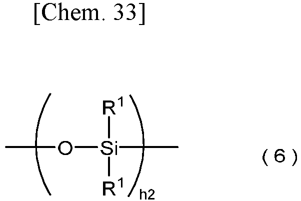
(wherein R¹ is the same as defined hereinabove; h2 is an integer of 1 to 6, preferably 1; and the left valence bond is bonded to Si); and
R⁴ independently at each occurrence is a single bond or a group represented by formula (7) below: 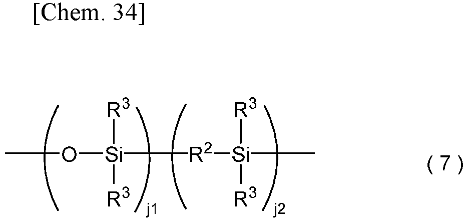
(wherein R² and R³ are the same as defined hereinabove; j1 is an integer of 0 to 6, preferably an integer of 0 to 3; j2 is an integer of 0 to 6, preferably an integer of 0 to 2; j1 + j2 is an integer of 1 to 10, preferably an integer of 1 to 3; the individual repeating units in the parentheses with j1 and j2 are optionally bonded randomly; and the left valence bond is bonded to Si),
with the proviso that one to six of all the groups R³ in the organopolysiloxane residue are groups represented by formula (6) and the number of silicon atoms is 3 to 13].

Examples of such Z include those illustrated below. In the structures below, it is preferable that the left valence bond be bonded to Q (or Rf) and the other valence bonds be bonded to Y (or the silicon atom).

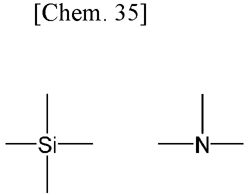

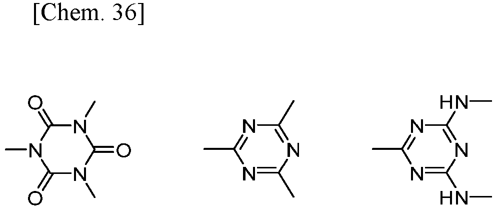

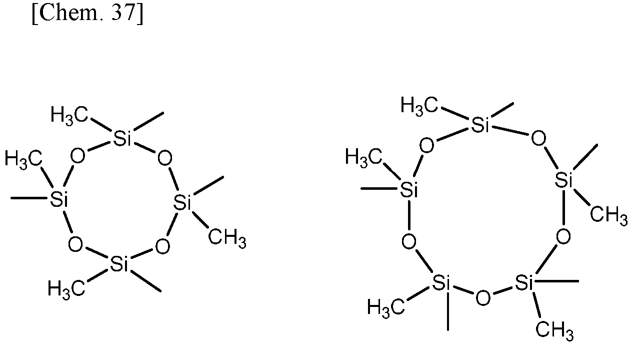

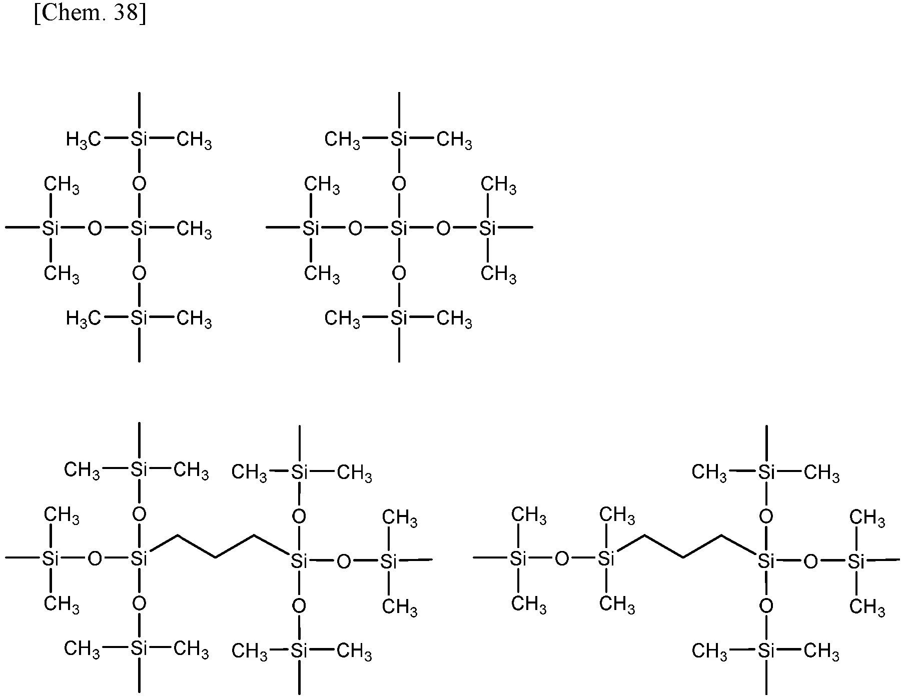

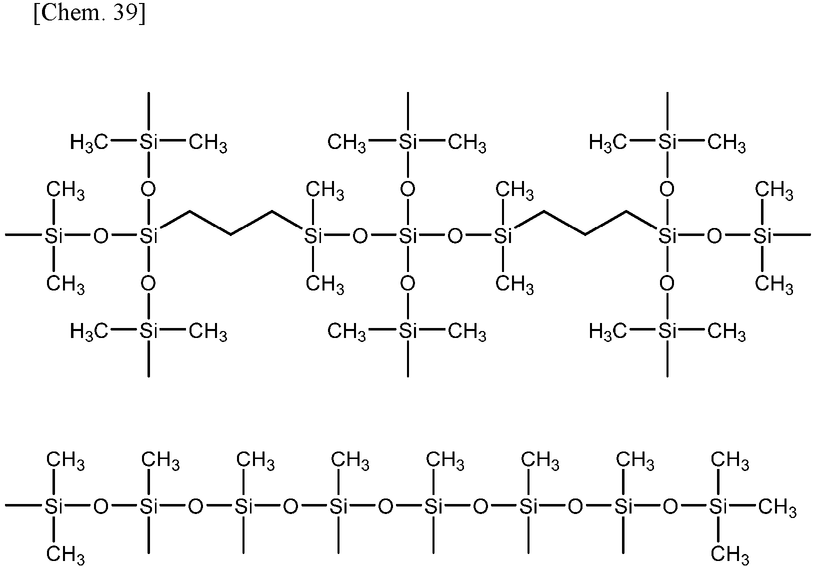

In formula (1), Y is a single bond or a divalent hydrocarbon group optionally having one, or two or more selected from fluorine atoms, silicon atoms, and siloxane bonds. The divalent hydrocarbon group optionally having one, or two or more selected from fluorine atoms, silicon atoms, and siloxane bonds is a group selected from the group consisting of C1-C10 alkylene groups, C1-C10 fluorine-containing alkylene groups, alkylene groups containing a C6-C8 arylene group (alkylene-arylene groups), divalent groups in which alkylene groups are bonded to one another via a silalkylene structure or a silarylene structure, and divalent groups in which a C2-C10 alkylene group is bonded to a valence bond of a linear divalent organopolysiloxane residue containing 2 to 10 silicon atoms or to a valence bond of a branched or cyclic divalent organopolysiloxane residue containing 3 to 10 silicon atoms.

Specific examples of Y other than a single bond include those illustrated below. In the following structures, it is preferable that the left valence bond be bonded to Z and the right valence bond be bonded to the silicon atom.

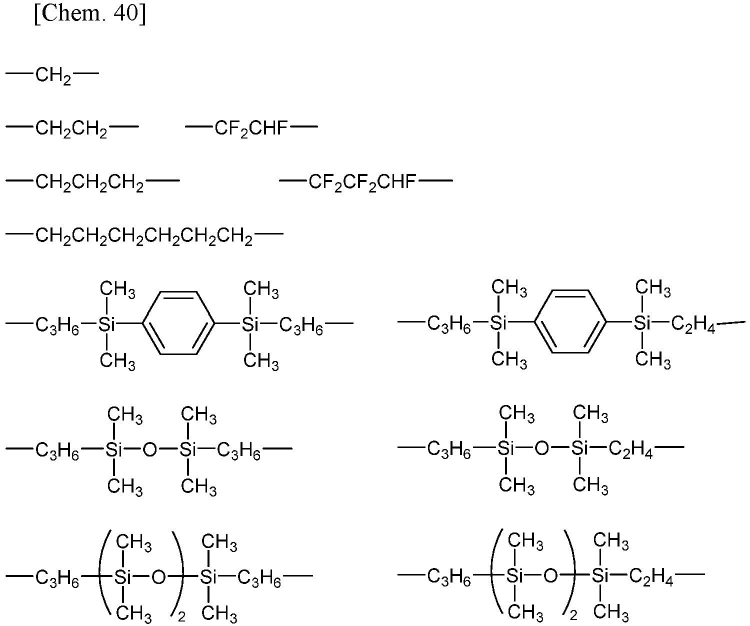

In formula (1), R independently at each occurrence is a C1-C4 alkyl group, such as a methyl group, an ethyl group, a propyl group, or a butyl group, or a phenyl group, and is particularly preferably a methyl group or an ethyl group.

In formula (1), X independently at each occurrence is a hydroxyl group or a hydrolyzable group. Examples of the hydrolyzable groups X include C1-C10 alkoxy groups, such as methoxy group, ethoxy group, propoxy group, isopropoxy group, butoxy group, isobutoxy group, sec-butoxy group, and tert-butoxy group; C2-C10 alkoxy-substituted alkoxy groups, such as methoxymethoxy group, methoxyethoxy group, ethoxymethoxy group, and ethoxyethoxy group; C2-C10 acyloxy groups, such as acetoxy group and propionoxy group; C2-C10 alkenyloxy groups, such as vinyloxy group, allyloxy group, propenoxy group, and isopropenoxy group; and halogen groups, such as chloro group, bromo group, and iodo group. In particular, X is preferably a methoxy group, an ethoxy group, an isopropenoxy group, or a chloro group.

In formula (1), a is 2 or 3 independently with respect to each unit bonded to the silicon atom, and is preferably 3 from the points of view of reactivity and the adhesion to a substrate.

Furthermore, b is an integer of 2 to 7, preferably 2 or 3.

Examples of the fluoropolyether group-containing polymers represented by formula (1) include those illustrated below: 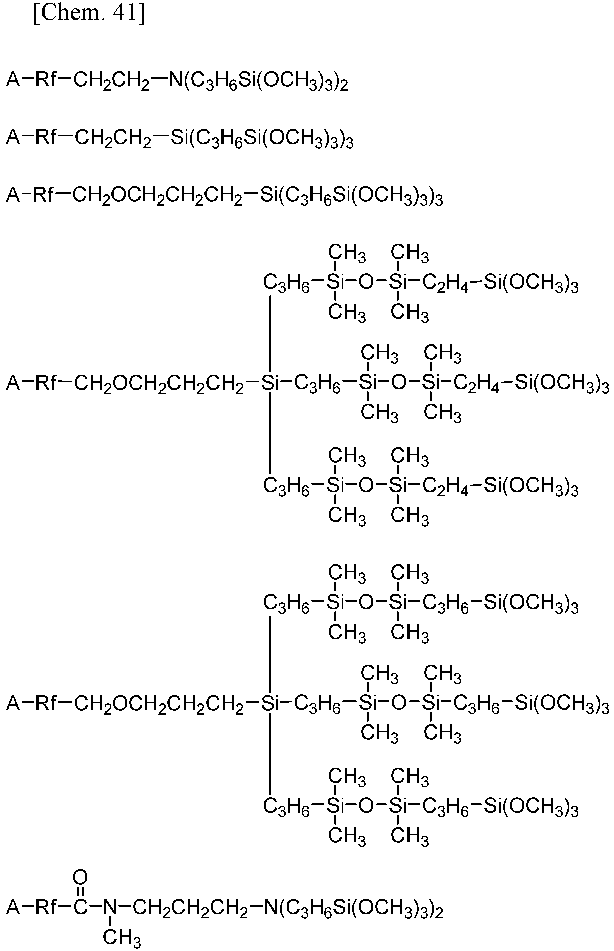 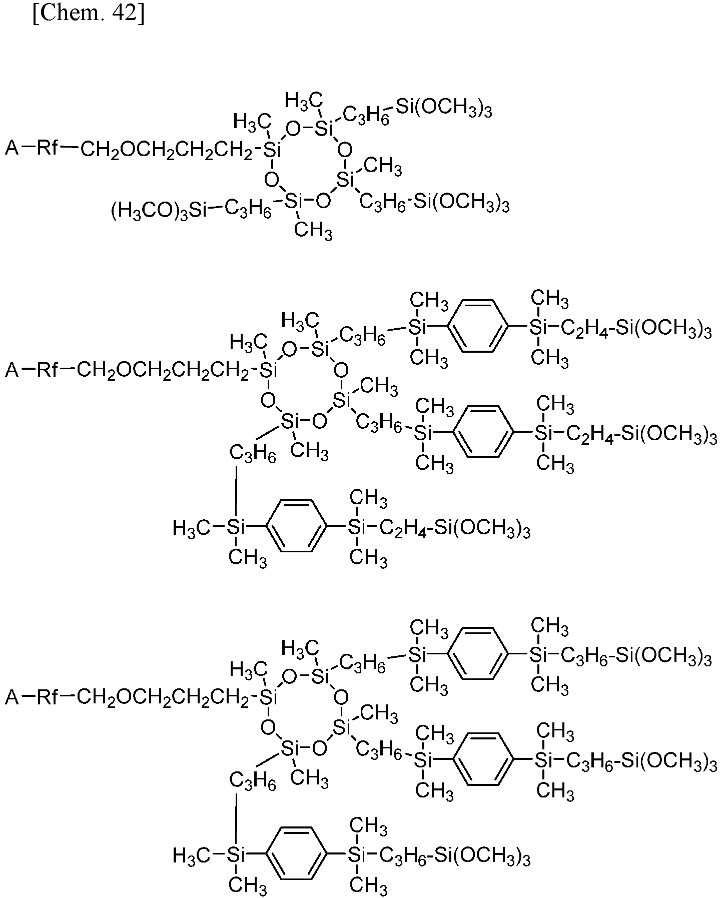 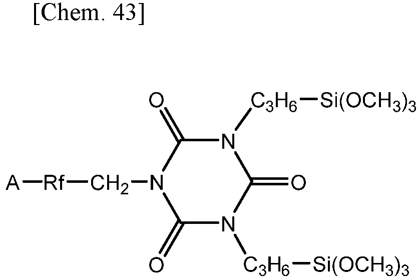 (wherein A and Rf are the same as defined hereinabove).

Next, the fluoropolyether group-containing polymers represented by formula (2) below will be described.

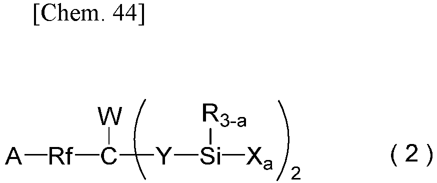

In formula (2), A, Rf, Y, R, X, and a are the same as defined hereinabove, and examples of A, Rf, Y, R, X, and a are the same as those in formula (1).

In formula (2), W is a hydrogen atom or -OV; and V is a hydrogen atom, a C1-C10 monovalent hydrocarbon group, or a monovalent group represented by formula (2a) below.

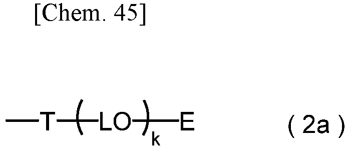

Here, examples of the C1-C10 monovalent hydrocarbon groups V include alkyl groups, such as methyl group, ethyl group, propyl group, butyl group, pentyl group, hexyl group, and octyl group; alkenyl groups, such as vinyl group and allyl group; aryl groups, such as phenyl group and tolyl group; and aralkyl groups, such as benzyl group and phenylethyl group, with C1-C3 alkyl groups and phenyl group being preferable.

In formula (2a), T is a single bond or a divalent group, and is preferably a single bond or a C2-C20 divalent hydrocarbon group optionally containing one or more bonds selected from the group consisting of silicon atoms, siloxane bonds, silalkylene bonds (for example, silethylene bonds and silpropylene bonds), silarylene bonds (for example, silphenylene bonds), and diorganosilylene groups (for example, dialkylsilylene groups, such as dimethylsilylene groups, and dialkoxysilylene groups, such as dimethoxysilylene groups), a divalent siloxane bond, a silalkylene group, or a diorganosilylene group. Specific examples of T other than a single bond include those illustrated below. In the structures below, it is preferable that the right valence bond be bonded to L or E.

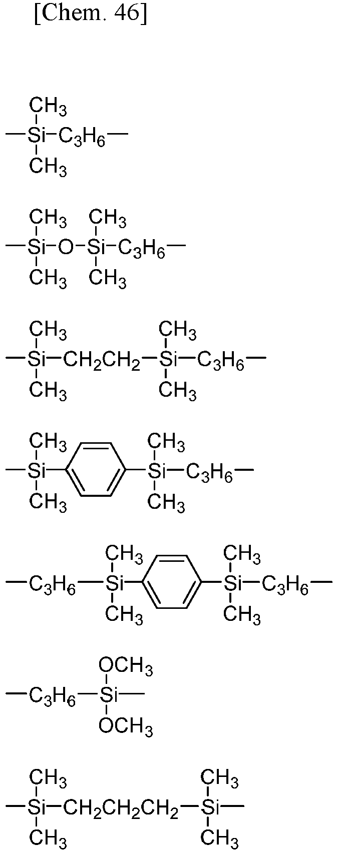

In formula (2a), L independently at each occurrence is a C1-C4 divalent hydrocarbon group, for example, an alkylene group, such as a methylene group, an ethylene group, a propylene group (a trimethylene group, a methylethylene group), or a butylene group (a tetramethylene group), and the (LO) units may have a uniform number of carbon atoms or mixed numbers of carbon atoms.

In formula (2a), k is an integer of 0 to 20, preferably an integer of 0 to 10, and more preferably an integer of 0 to 6. When (LO) is present, k is preferably 1 or greater, and is particularly preferably 2 or greater.

In formula (2a), E is a C1-C4 alkyl group, such as a methyl group, an ethyl group, a propyl group, or a butyl group, a C1-C6 monovalent hydrocarbon group, such as a phenyl group, or a monovalent hydroxyl-containing silyl group-containing group or hydrolyzable silyl group-containing group represented by formula (2b) below: 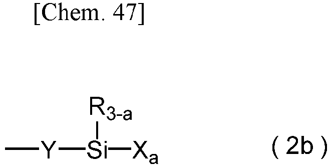 (wherein Y, R, X, and a are the same as defined hereinabove).

In formula (2b), Y, R, X, and a are the same as defined hereinabove, and examples of Y, R, X, and a are the same as those in formula (1).

Examples of the monovalent groups represented by formula (2a) include those illustrated below.

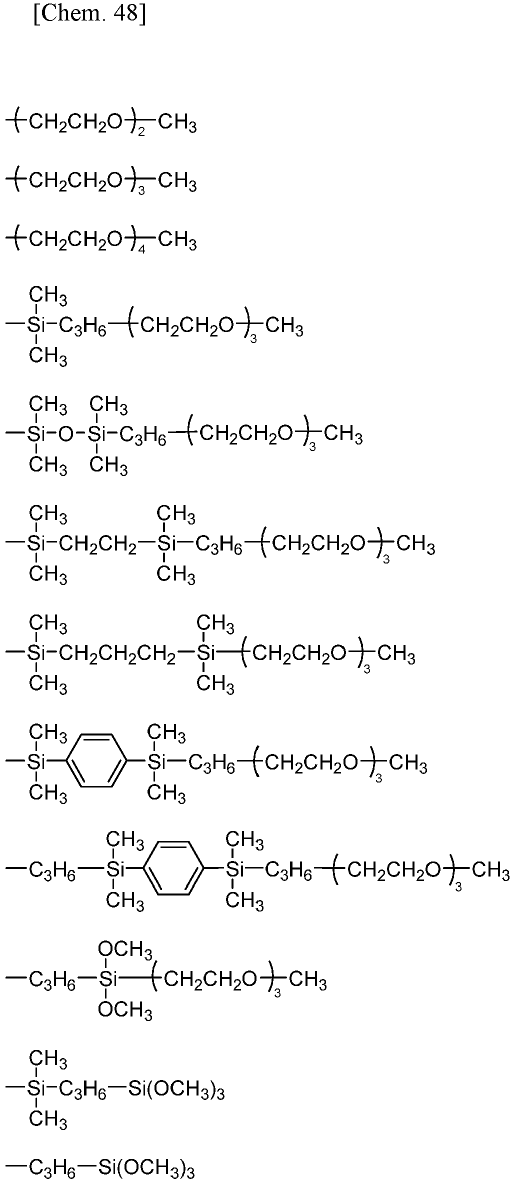

Examples of the fluoropolyether group-containing polymers represented by formula (2) include those illustrated below: 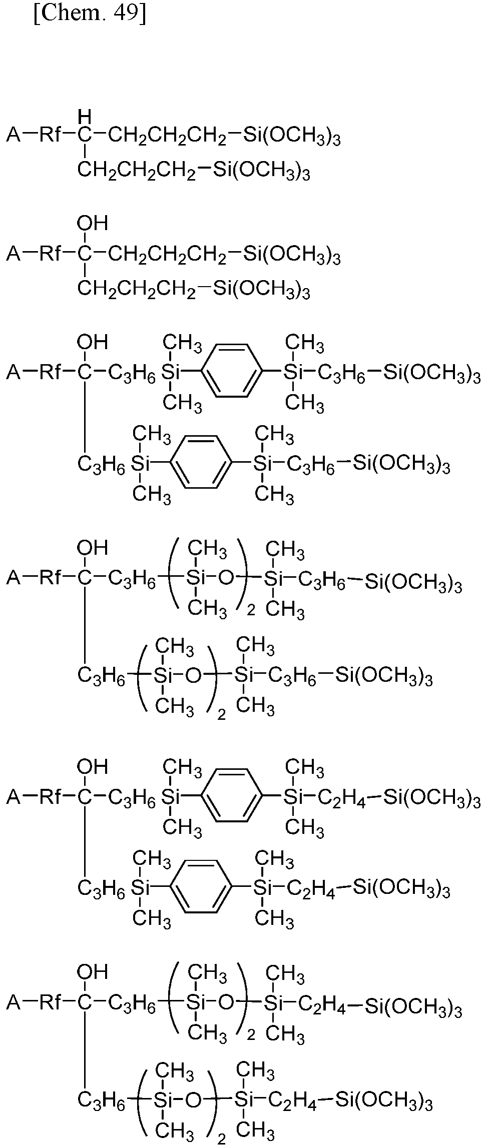 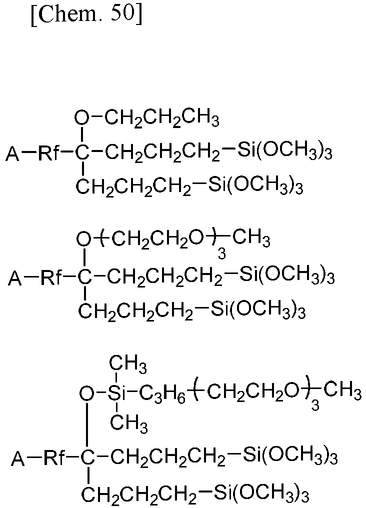 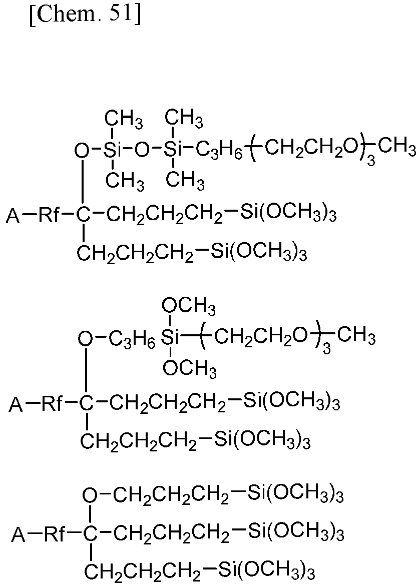 (wherein A and Rf are the same as defined hereinabove).

Next, the fluoropolyether group-containing polymers represented by formula (3) below will be described.

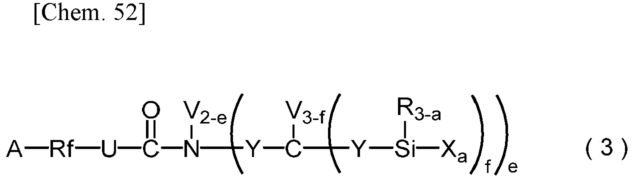

In formula (3), A, Rf, V, Y, R, X, and a are the same as defined hereinabove, and examples of A, Rf, V, Y, R, X, and a are the same as those in formula (1). The plurality of V and the plurality of Y (that is, V bonded to the nitrogen atom, and V bonded to the carbon atom; and Y bonded to the nitrogen atom and the carbon atom, and Y bonded to the carbon atom and the silicon atom) may be each the same as or different from one another.

In formula (3), U is a single bond or a C2-C15 divalent hydrocarbon group optionally having an ether bond. Specific examples of U other than a single bond include those illustrated below. In the structures below, it is preferable that the left valence bond be bonded to Rf and the right valence bond be bonded to the carbon atom (-C(=O)-).

[Chem. 53] -CH₂OCH₂- -CH₂OCH₂CH₂CH₂CH₂- -CH₂CH₂CH₂OCH₂CH₂CH₂-

In formula (3), e is 1 or 2, and is preferably 1.

In formula (3), f is an integer of 1 to 3 independently with respect to each unit bonded to the carbon atom.

Examples of the fluoropolyether group-containing polymers represented by formula (3) include those illustrated below: 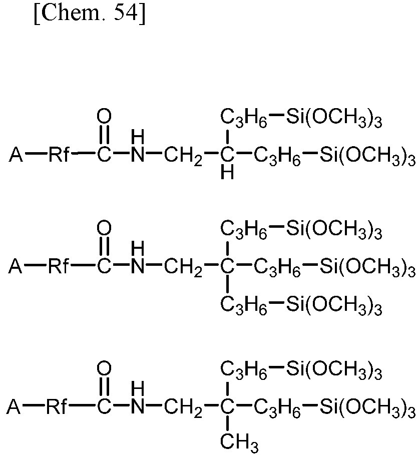 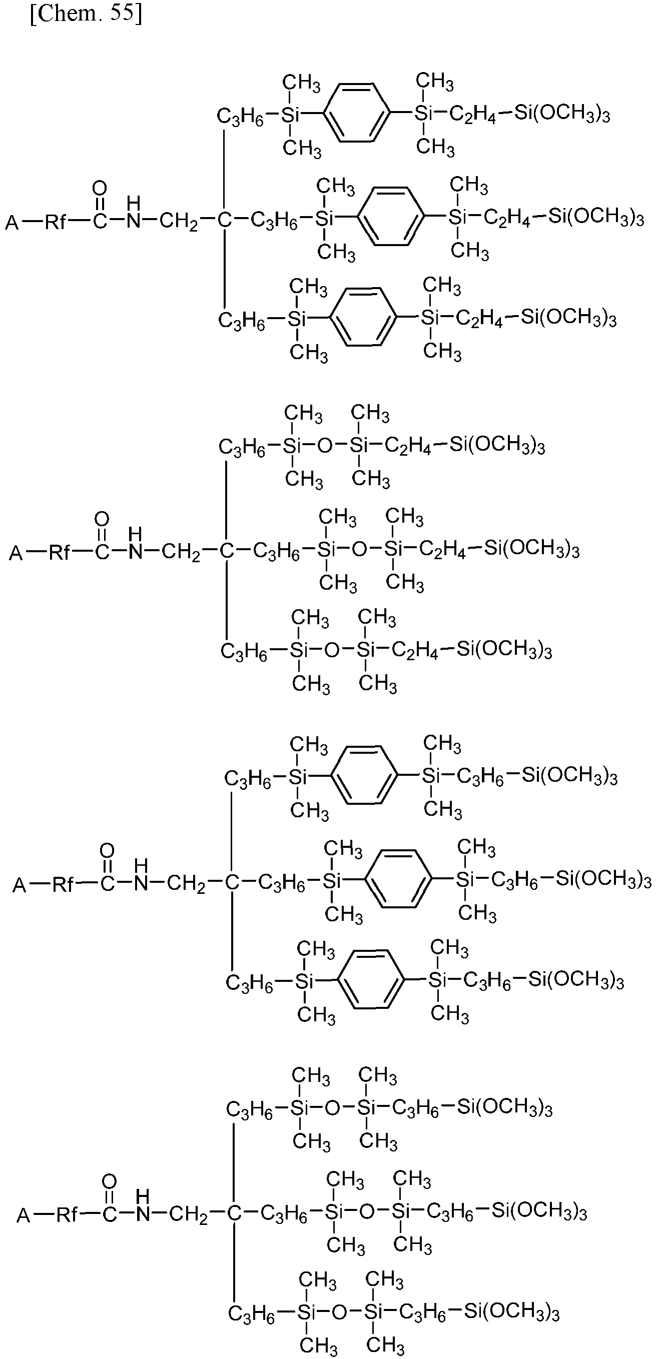 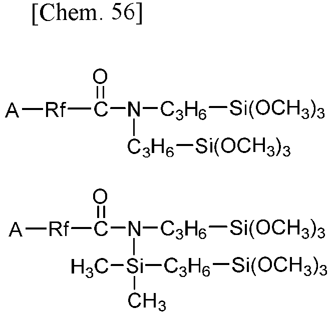 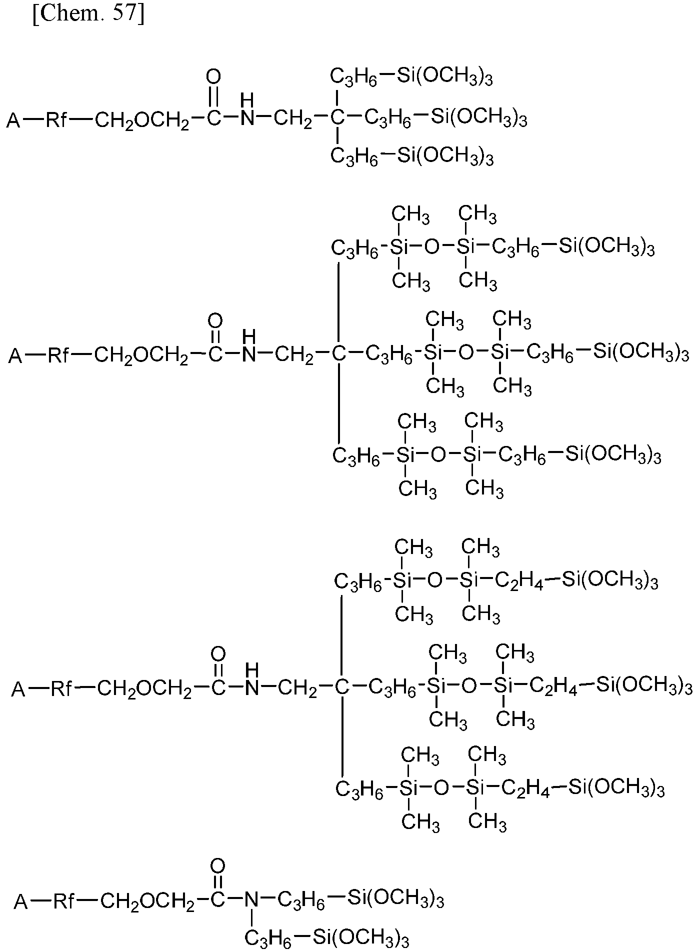 (wherein A and Rf are the same as defined hereinabove).

The component (I) may be a single polymer or a combination of two or more polymers selected from the fluoropolyether group-containing polymers represented by formulas (1), (2), and (3). Furthermore, the components may include a partial (hydrolyzed) condensate obtained by condensing hydroxyl groups of the fluoropolyether group-containing polymer represented by formula (1), (2), or (3), or by condensing hydroxyl groups resulting from partial pre-hydrolysis of the terminal hydrolyzable groups of the fluoropolyether group-containing polymer by a known process.

### [Components (II)]

In the fluoropolyether group-containing polymer composition of the present invention, the component (II) is a fluoropolyether group-containing polymer represented by formula (4) below and/or a partial (hydrolyzed) condensate thereof: 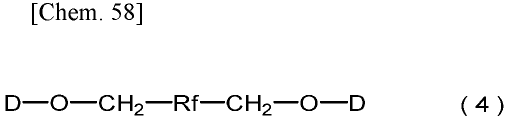 (wherein Rf is the same as defined hereinabove; and D independently at each occurrence is a monovalent group terminated with a hydroxyl-containing silyl group or a hydrolyzable silyl group and having no polar groups).

The fluoropolyether group-containing polymer represented by formula (4) has a structure in which a fluorooxyalkylene group and hydrolyzable silyl groups, such as alkoxysilyl groups, or hydroxyl-containing silyl groups are bonded together via linking groups having no polar groups. Each terminal has one or more hydrolyzable silyl groups, such as alkoxysilyl groups, or hydroxyl-containing silyl groups, and the molecule includes a total of two or more such groups. Except for the hydrolyzable silyl groups or the hydroxyl-containing silyl groups, the molecule contains no polar groups, such as, specifically, carbonyl groups, -NH- groups, amide groups, and hydroxyl groups, and thus has a simpler bonding mode.

In formula (4), Rf is the same as defined hereinabove, and examples of Rf are the same as those in formula (1).

In formula (4), D independently at each occurrence is a monovalent group terminated with a hydroxyl-containing silyl group or a hydrolyzable silyl group and having no polar groups, and is preferably a monovalent group that includes a hydroxyl-containing silyl group or a hydrolyzable silyl group at a terminal and a linking group which connects the above silyl group to the O group (the ether-bonded oxygen atom) and which has no polar groups (such as carbonyl groups, -NH- groups, amide groups, or hydroxyl groups). Such D is preferably a group represented by formula (4a) below: 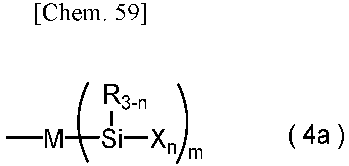 (wherein R and X are the same as defined hereinabove; M is a divalent to hexavalent hydrocarbon group optionally having a silicon atom and/or a siloxane bond; m is an integer of 1 to 5; and n is an integer of 1 to 3 independently with respect to each unit bonded to the silicon atom).

Specifically, the fluoropolyether group-containing polymer represented by formula (4) is preferably represented by formula (5) below: 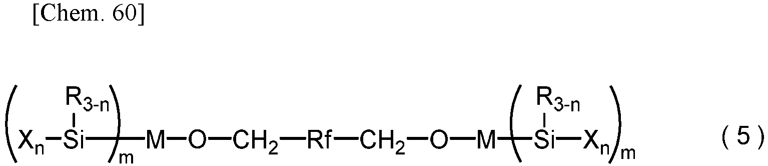 (wherein Rf, R, and X are the same as defined hereinabove; M independently at each occurrence is a divalent to hexavalent hydrocarbon group optionally having a silicon atom and/or a siloxane bond; m independently at each occurrence is an integer of 1 to 5; and n is an integer of 1 to 3 independently with respect to each unit bonded to the silicon atom).

In formula (5), Rf, R, and X are the same as defined hereinabove, and examples of Rf, R, and X are the same as those in formula (1).

In formula (5), M independently at each occurrence is a divalent to hexavalent, preferably divalent to tetravalent, more preferably divalent hydrocarbon group optionally having a silicon atom and/or a siloxane bond. The absence of polar groups in the molecule can impart excellent water/oil repellency to a coating film.

Specific examples of M include C3-C10 alkylene groups, such as propylene group, butylene group, and hexamethylene group; C2-C10 alkylene groups having a C6-C8 arylene group, such as a phenylene group (such as, for example, C8-C16 alkylene-arylene groups); divalent groups in which C2-C10 alkylene groups are bonded to one another via a silalkylene structure or a silarylene structure; and divalent to hexavalent groups in which a C2-C10 alkylene group is bonded to a valence bond of a linear, branched, or cyclic, divalent to hexavalent organopolysiloxane residue having 2 to 10 silicon atoms, preferably 2 to 5 silicon atoms. C3-C10 alkylene groups; C2-C10 alkylene groups containing a phenylene group; divalent groups in which C2-C10 alkylene groups are bonded to one another via a silalkylene structure or a silarylene structure; and divalent to tetravalent groups in which a C2-C10 alkylene group is bonded to a valence bond of a linear divalent to tetravalent organopolysiloxane residue having 2 to 10 silicon atoms or to a valence bond of a branched or cyclic, divalent to tetravalent organopolysiloxane residue having 3 to 10 silicon atoms are preferable. C3-C6 alkylene groups are more preferable.

Here, examples of the linear, branched, or cyclic, divalent to hexavalent organopolysiloxane residues having 2 to 10 silicon atoms, preferably 2 to 5 silicon atoms, include those illustrated below: 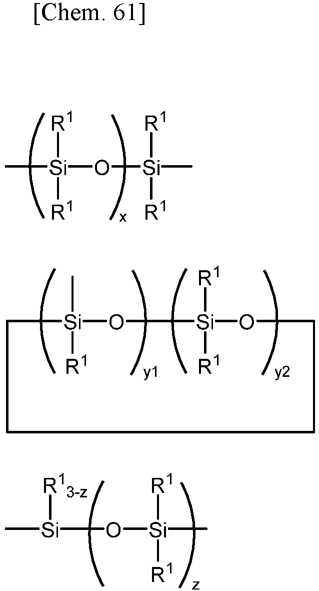 (wherein R¹ is the same as defined hereinabove; x is an integer of 1 to 9, preferably an integer of 1 to 4; y1 is an integer of 2 to 6, preferably an integer of 2 to 4; y2 is an integer of 0 to 8, preferably 0 or 1; y1 + y2 is an integer of 3 to 10, preferably an integer of 3 to 5; and z is 2 or 3).

Examples of M include groups represented by the following formulas: 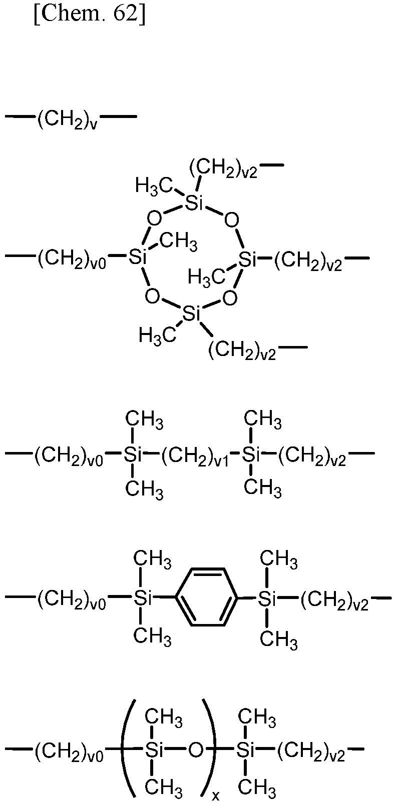 (wherein x is the same as defined hereinabove; v is an integer of 3 to 10, preferably an integer of 3 to 6; v0 is an integer of 2 to 10, preferably an integer of 3 to 6; v1 is an integer of 2 to 6, preferably an integer of 2 to 4; and v2 independently at each occurrence is an integer of 2 to 10, preferably an integer of 2 to 6).

For example, specific examples of M include the following groups.

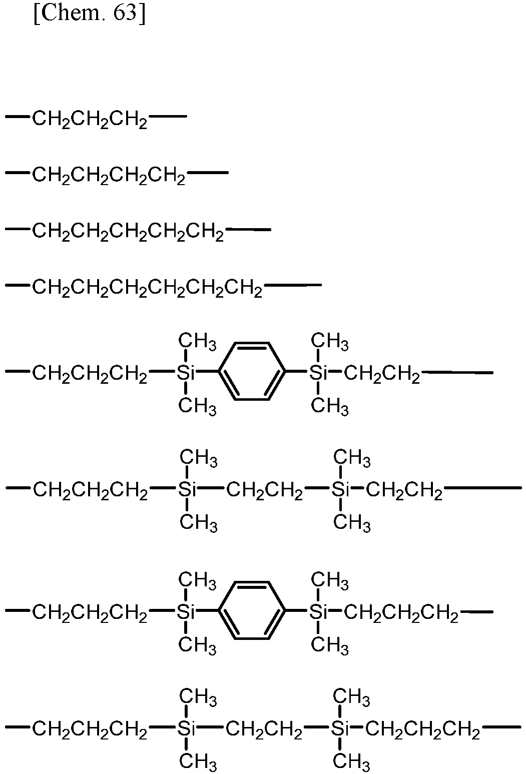

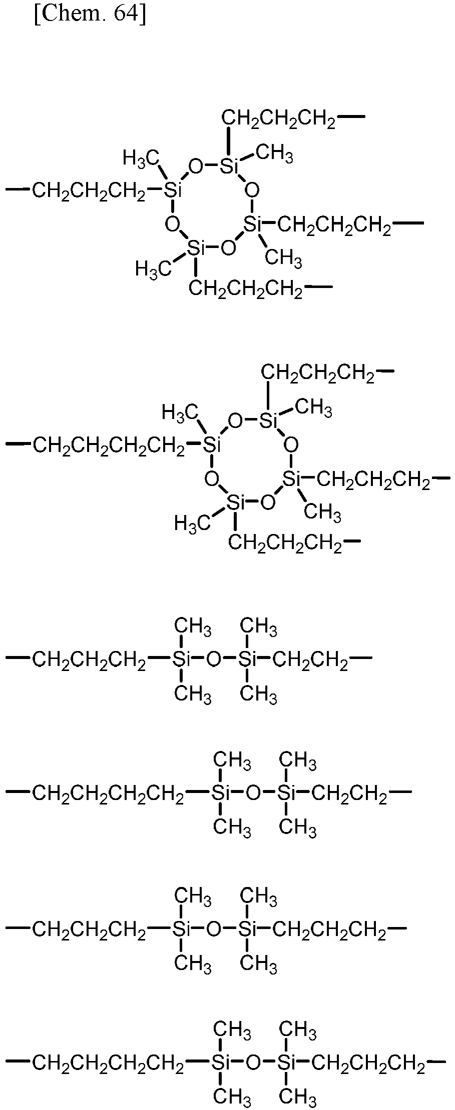

In formula (5), m independently at each occurrence is an integer of 1 to 5. If m is less than 1, the adhesion to a substrate is lowered. If m is 6 or greater, the terminal hydroxyl-containing silyl groups or the terminal hydrolyzable silyl groups are so many that adverse effects on performance will be caused. Thus, m is preferably an integer of 1 to 3, and particularly preferably 1.

In formula (5), n is an integer of 1 to 3 independently with respect to each unit bonded to the silicon atom, and is preferably 3 from the points of view of reactivity and the adhesion to a substrate.

Examples of the fluoropolyether group-containing polymers represented by formula (4) include those illustrated below: 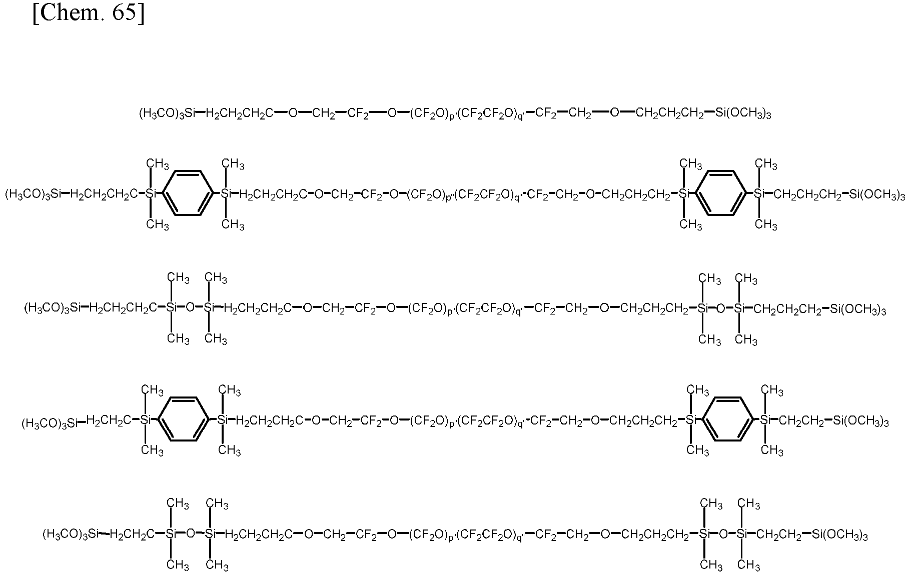 (wherein p" and q" are each an integer of 1 to 199; and the sum of p" and q" is 10 to 200).

The component (II) may be a single fluoropolyether group-containing polymer represented by formula (4) or may be a combination of two or more of such polymers. Furthermore, the components may include a partial (hydrolyzed) condensate obtained by condensing hydroxyl groups of the fluoropolyether group-containing polymer represented by formula (4), or by condensing hydroxyl groups resulting from partial pre-hydrolysis of the terminal hydrolyzable groups of the fluoropolyether group-containing polymer by a known process.

In the fluoropolyether group-containing polymer composition of the present invention, the content of the component (I) is 55 to 85 wt%, preferably 60 to 80 wt% of the total of the components (I) and (II), and the content of the component (II) is 15 to 45 wt%, preferably 20 to 40 wt% of the total of the components (I) and (II). If the content of the component (I) is less than 55 wt% (the content of the component (II) is more than 45 wt%), the lubricating effect stemming from the polymer mobility of the component (I) fails to offer high abrasion resistance. If the content of the component (I) is more than 85 wt% (the content of the component (II) is less than 15 wt%), the adhesion to a substrate offered by the component (II) is low and the component (I) is easily removed by cleaning, with the result that high abrasion resistance cannot be obtained.

In addition to the components (I) and (II) described above, the fluoropolyether group-containing polymer composition of the present invention may include optional components, such as hydrocarbon oils, silicone oils, fluoropolyether oils, silane coupling agents, and surfactants, as long as the object of the present invention is not impaired.

The present invention further provides a coating agent including the fluoropolyether group-containing polymer composition described above.

Where necessary, the coating agent of the present invention may include a hydrolysis condensation catalyst, for example, an organotin compound (such as dibutyltin dimethoxide or dibutyltin dilaurate), an organotitanium compound (such as tetra-n-butyl titanate), an organic acid (such as acetic acid, methanesulfonic acid, or fluorine-modified carboxylic acid), or an inorganic acid (such as hydrochloric acid or sulfuric acid). Among those described above, for example, acetic acid, tetra-n-butyl titanate, dibutyltin dilaurate, and fluorine-modified carboxylic acid are particularly desirable.

The amount in which the hydrolysis condensation catalyst is added is a catalytic amount and is usually 0.01 to 5 parts by weight, in particular, 0.1 to 1 part by weight per 100 parts by weight of the fluoropolyether group-containing polymer composition.

The coating agent of the present invention may include an appropriate solvent. Examples of such solvents include fluorine-modified aliphatic hydrocarbon solvents (such as perfluoroheptane and perfluorooctane), fluorine-modified aromatic hydrocarbon solvents (such as 1,3-bis(trifluoromethyl)benzene), fluorine-modified ether solvents (such as methyl perfluorobutyl ether, ethyl perfluorobutyl ether, and perfluoro(2-butyltetrahydrofuran)), fluorine-modified alkylamine solvents (such as perfluorotributylamine and perfluorotripentylamine), hydrocarbon solvents (such as petroleum benzine, toluene, and xylene), and ketone solvents (such as acetone, methyl ethyl ketone, and methyl isobutyl ketone). Among these, fluorine-modified solvents are desirable in terms of, for example, solvent properties and wetting properties. In particular, 1,3-bis(trifluoromethyl)benzene, perfluoro(2-butyltetrahydrofuran), perfluorotributylamine, and ethyl perfluorobutyl ether are preferable.

The solvent may be a mixture of two or more of the above solvents and is preferably capable of uniformly dissolving the fluoropolyether group-containing polymer composition (the fluoropolyether group-containing polymers and partial (hydrolyzed) condensates thereof). The optimal concentration of the fluoropolyether group-containing polymer composition (the fluoropolyether group-containing polymers and partial (hydrolyzed) condensates thereof) dissolved in the solvent varies depending on the processing technique and may be any concentration that allows for easy weighing. When the coating agent will be applied directly, the concentration is preferably 0.01 to 10 parts by weight, in particular 0.05 to 5 parts by weight, per 100 parts by weight of the total of the solvent and the fluoropolyether group-containing polymer composition (the fluoropolyether group-containing polymers and partial (hydrolyzed) condensates thereof). When the coating agent will be processed by evaporation, the concentration is preferably 1 to 100 parts by weight, in particular 3 to 30 parts by weight, per 100 parts by weight of the total of the solvent and the fluoropolyether group-containing polymer composition (the fluoropolyether group-containing polymers and partial (hydrolyzed) condensates thereof).

The coating agent of the present invention may be applied to a substrate by a known technique, such as brush coating, dipping, spraying, or evaporation. In the case of evaporation, the heating mode is not particularly limited and may be either resistance heating or EB heating. The curing temperature varies depending on how the coating agent is cured. In the case of, for example, direct application (such as brush coating, dipping, or spraying), preferred conditions are such that the temperature is 25 to 200°C, in particular 25 to 80°C, and the time is 30 minutes to 36 hours, in particular 1 to 24 hours. When the coating agent is applied by evaporation, conditions are desirably such that the temperature is in the range of 20 to 200°C, in particular 25 to 80°C, and the time is 30 minutes to 36 hours, in particular 30 minutes to 24 hours. The coating agent may be cured under humidified conditions. The thickness of the cured film is chosen appropriately in accordance with the type of substrate but is usually 0.1 to 100 nm, in particular 1 to 20 nm. For example, the film thickness may be measured by such a technique as spectroscopic reflectance measurement, X-ray reflectance measurement, spectroscopic ellipsometry measurement, or fluorescent X-ray measurement. In the case of, for example, spray coating, the coating agent may be diluted beforehand with a fluorinated solvent containing an amount of water and may be thereby hydrolyzed, that is, Si-OH may be formed. The coating that is sprayed in this manner cures rapidly after the application.

The substrates to be treated with the coating agent of the present invention are not particularly limited and may be of various materials, such as paper, fabrics, metals and oxides thereof, glass, plastics, ceramics, and quartz. The coating agent of the present invention can form a cured film that can impart water/oil repellency and abrasion resistance (resistance to steel wool abrasion) to the substrate and maintains high abrasion resistance even after surface cleaning. In particular, the coating agent may be suitably used on SiO₂-treated glass or films.

Examples of the articles to be treated with the coating agent of the present invention include car navigation systems, mobile phones, smartphones, digital cameras, digital video cameras, PDA, portable audio players, car audio systems, game devices, eyeglass lenses, camera lenses, lens filters, sunglasses, medical equipment, such as gastroscopes, copiers, PC, liquid crystal displays, organic EL displays, plasma displays, touch panel displays, protective films, anti-reflection films, and other optical articles. The coating films are not slippery and thus may be used to treat the housings of mobile phones, smartphones, PC, and the like. The coating agent of the present invention can prevent the articles from fingerprint and sebum fouling and further can impart scratch resistance (abrasion resistance), thus being particularly useful as a water/oil-repellent layer for the housings of mobile phones, smartphones, PC, and the like.

The coating agent of the present invention is also useful as an antifouling coating on sanitary products, such as bathtubs and sinks; an antifouling coating on, for example, window glass or tempered glass and headlamp covers in automobiles, trains, aircraft, and the like; a water/oil-repellent coating on exterior building materials; an oil buildup-preventing coating on kitchen building materials; an antifouling and anti-posting/anti-graffiti coating on telephone booths; a fingerprint fouling-preventing coating on artworks and the like; a fingerprint fouling-preventing coating on compact discs, DVD, and the like; a mold release agent; a paint additive; a resin modifier; a fluidity modifier or dispersibility modifier for inorganic fillers; and a water/oil-repellent agent for tapes, films, and the like. Furthermore, the non-slipperiness of the coating agent is also beneficial for use as an antifouling coating for building materials, in particular, flooring materials and wall materials.

According to the present invention, the surface of an article can be modified by applying the coating agent including the fluoropolyether group-containing polymer composition of the present invention to part or the whole of the surface of the article by a dry process (evaporation) or a wet process (such as brush coating, dipping, or spraying) and curing the coating agent to form a layer.

An article that has a layer including a cured product of the coating agent of the present invention maintains high abrasion resistance even after surface cleaning.

In an article having a layer including a cured product of the coating agent of the present invention, the surface of the article, after being cleaned, preferably resists 2,500 or more abrasion resistance cycles, more preferably 7,500 or more abrasion resistance cycles, under test conditions described below. If the abrasion resistance cycles are less than 2,500, the cured film easily lowers its water repellency or is easily scratched. In the present invention, the surface of an article that has been cleaned can achieve the above abrasion resistance cycles or higher abrasion resistance by virtue of the fluoropolyether group-containing polymer composition in the coating agent of the present invention being designed so that the fluoropolyether group-containing polymer represented by formula (4) and/or a partial (hydrolyzed) condensate thereof as the component (II) represents 15 wt% or more and 45 wt% or less.

### [Abrasion resistance test conditions]

Evaluation of resistance to steel wool abrasion using a reciprocating abrasion tester

| | |
|---|---|
| Abrasive material: | steel wool #0000 (Bonstar) |
| Load: | 1 kgf |
| Reciprocating distance: | 40 mm |
| Reciprocating speed: | 60 reciprocations per minute |
| Test environment conditions: | 25°C, 50% relative humidity |

The contact angle with water of the friction-abraded portion is measured every 2,500 reciprocating friction cycles, and the number of reciprocating abrasion cycles up to which the contact angle with water is 100 degrees or more is taken as the number of abrasion resistance cycles.

### EXAMPLES

Hereinbelow, the present invention will be described in greater detail by presenting Examples and Comparative Examples. However, the present invention is not limited to the following Examples. The number of repetitions of each fluorooxyalkylene unit in a fluorooxyalkylene group-containing polymer residue is the number average calculated by ¹⁹F-NMR. In the formulas below, the individual repeating units in the parentheses with p1 and q1 are bonded randomly. Furthermore, the film thickness is a value measured by spectroscopic ellipsometry measurement using a spectroscopic ellipsometer. The test environment conditions are 25°C and 50% relative humidity.

### [Examples 1 to 11 and Comparative Examples 1 to 13]

### Preparation of coating agents and formation of cured films

The components (I) are fluoropolyether group-containing polymers having a structure represented by formula (A), (B), (C), (D), (E), (F), (G), (H), (I), (J), (K), (L), or (M) below.

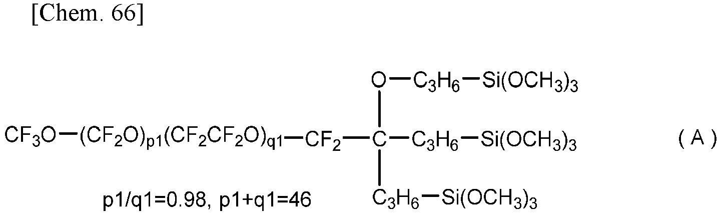

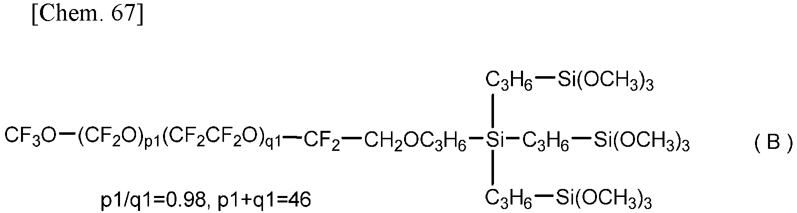

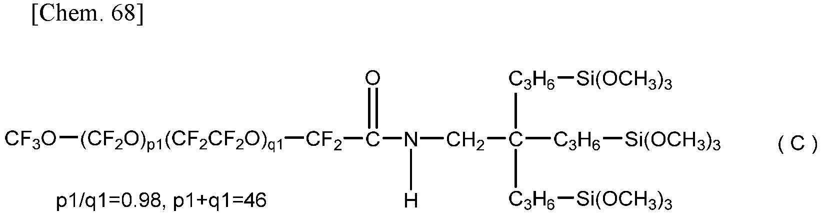

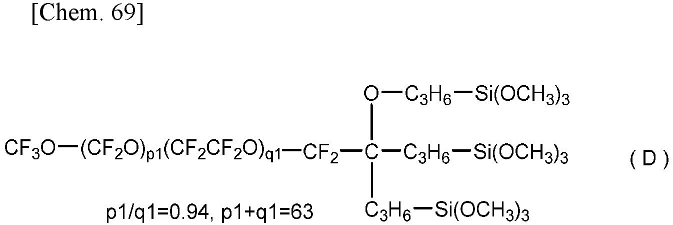

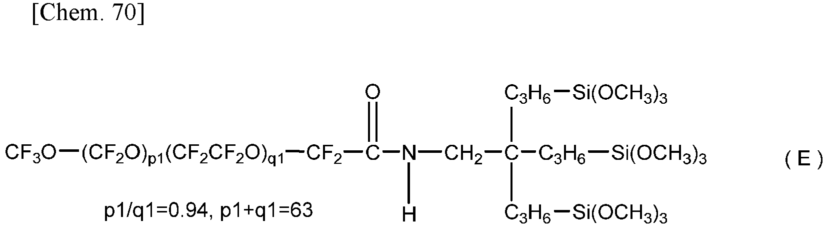

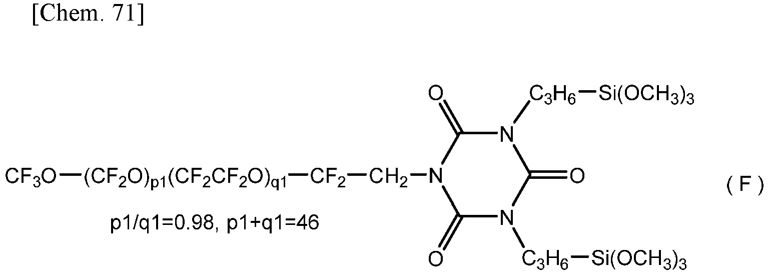

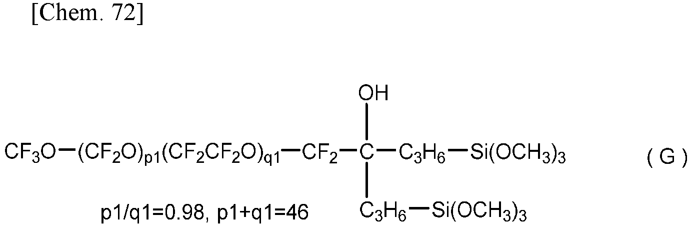

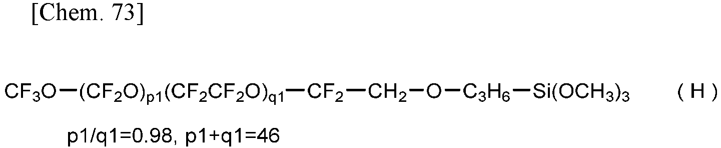

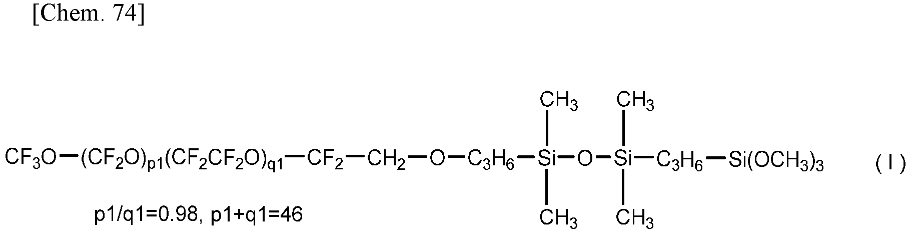

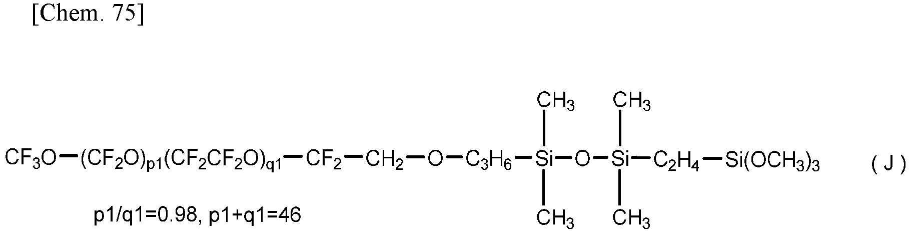

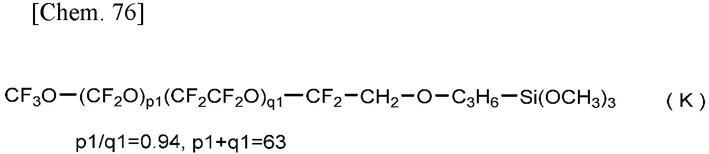

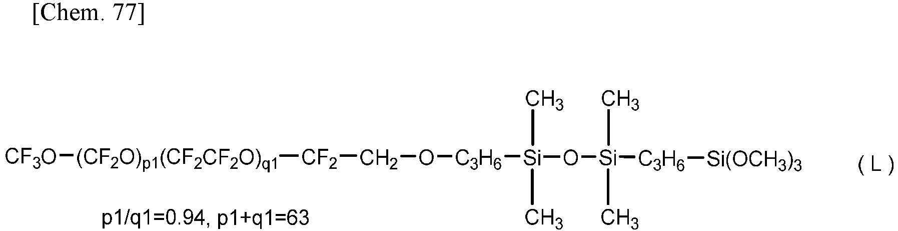

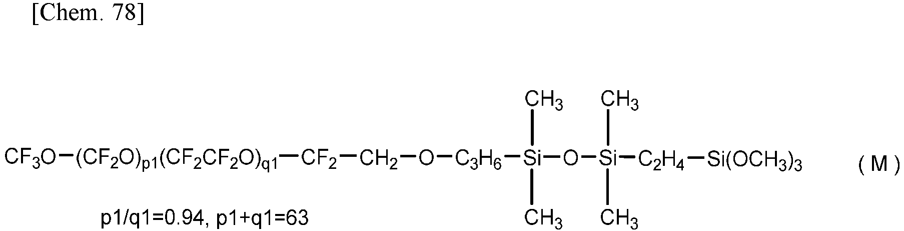

The components (II) are fluoropolyether group-containing polymers having a structure represented by formula (N), (O), (P), (Q), (R), (S), (T), (U), (V), (W), (X), or (Y) below.

[Chem. 79] (H₃CO)₃Si-H₂CH₂CH₂C-O-CH₂-CF₂-O-(CF₂O)ₚ₁(CF₂CF₂O)_{q1}-CF₂-CH₂-O-CH₂CH₂CH₂-Si(OCH₃)₃

p1/q1=0.98, p1+q1=46 (N)

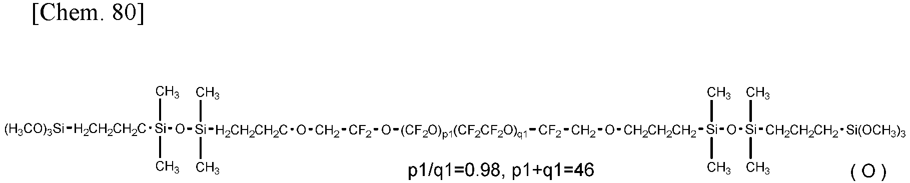

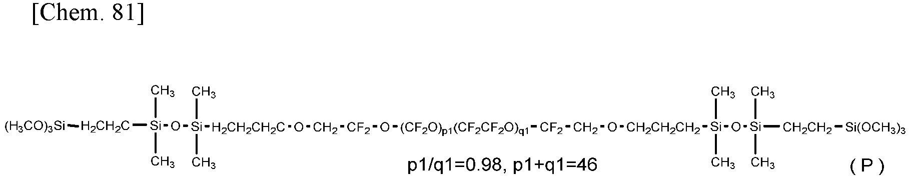

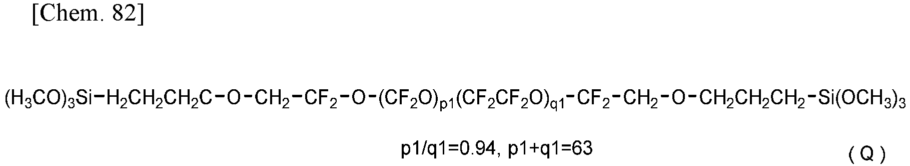

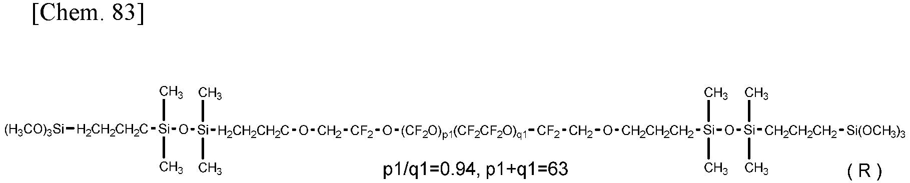

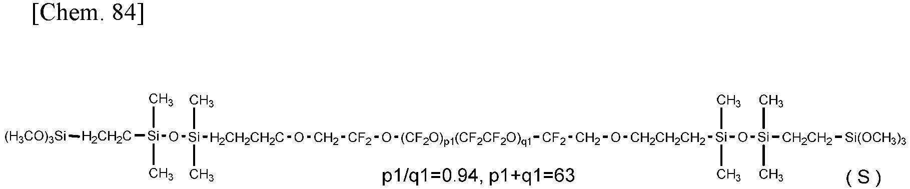

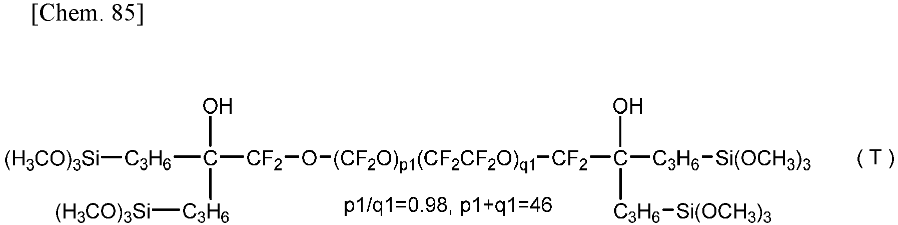

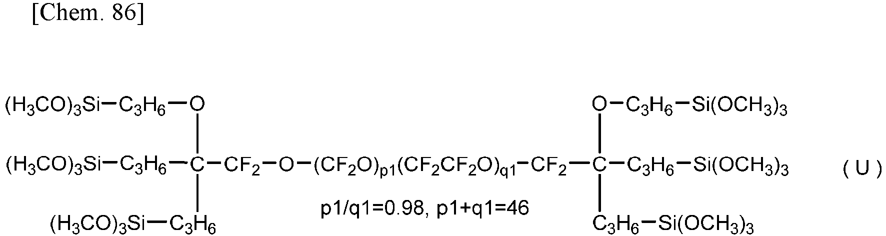

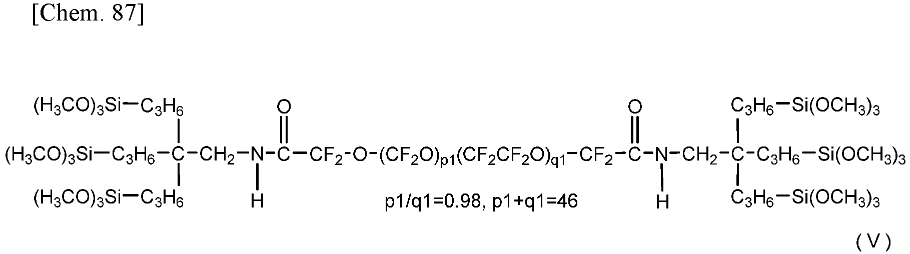

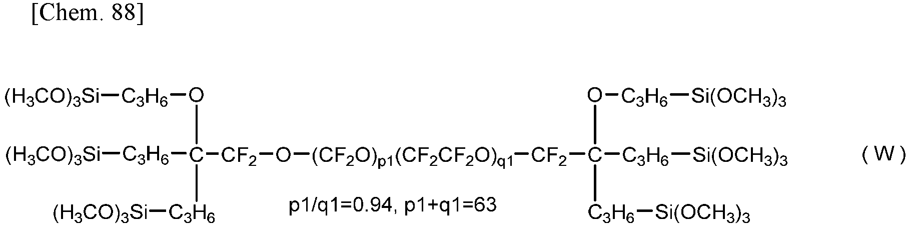

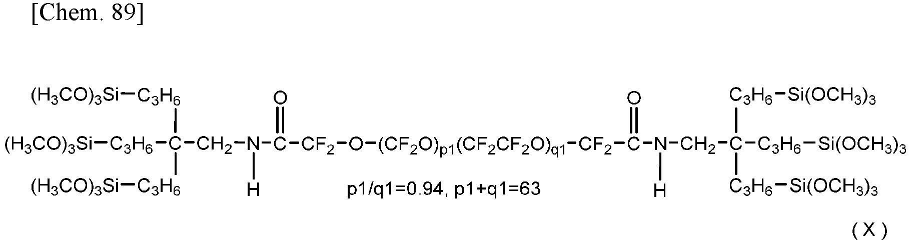

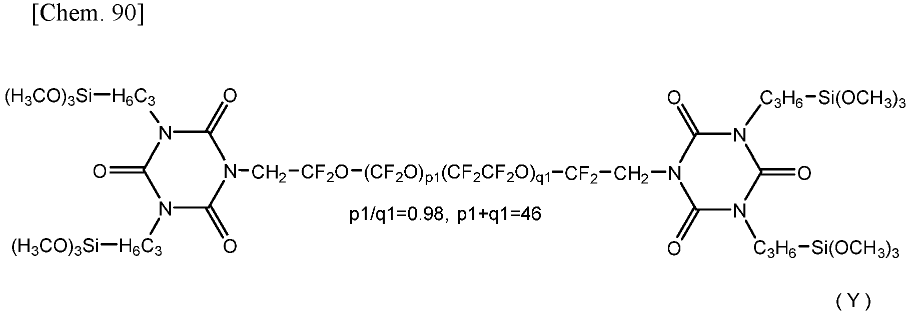

The polymers were mixed in proportions described in Tables 1, 2, and 3 to give fluoropolyether group-containing polymer compositions. The polymer compositions were dissolved in Novec 7200 (manufactured by 3M, ethyl perfluorobutyl ether) to give 0.1 wt% coating agents. Each of the coating agents was sprayed onto chemically strengthened aluminosilicate glass (Gorilla manufactured by Corning), allowed to stand in an atmosphere of 80°C and 80% relative humidity for 30 minutes, and cured for at least 12 hours in an atmosphere of 25°C and 50% relative humidity. Cured films having a thickness described in Table 4, 5, or 6 were thus formed.

**[Table 1]**

| | Coating agent formulations | | | |
|---|---|---|---|---|
| | Component (I) | | Component (II) | |
| | Structural formula | Proportion (wt%) | Structural formula | Proportion (wt%) |
| Comparative Example 1-1 | (A) | 90 | (N) | 10 |
| Example 1-1 | (A) | 80 | (N) | 20 |
| Example 1-2 | (A) | 70 | (N) | 30 |
| Example 1-3 | (A) | 60 | (N) | 40 |
| Comparative Example 1-2 | (A) | 50 | (N) | 50 |
| Comparative Example 2-1 | (B) | 90 | (N) | 10 |
| Example 2-1 | (B) | 80 | (N) | 20 |
| Example 2-2 | (B) | 70 | (N) | 30 |
| Example 2-3 | (B) | 60 | (N) | 40 |
| Comparative Example 2-2 | (B) | 50 | (N) | 50 |
| Comparative Example 3-1 | (C) | 90 | (N) | 10 |
| Example 3-1 | (C) | 80 | (N) | 20 |
| Example 3-2 | (C) | 70 | (N) | 30 |
| Example 3-3 | (C) | 60 | (N) | 40 |
| Comparative Example 3-2 | (C) | 50 | (N) | 50 |
| Comparative Example 4-1 | (D) | 90 | (N) | 10 |
| Example 4-1 | (D) | 80 | (N) | 20 |
| Example 4-2 | (D) | 70 | (N) | 30 |
| Example 4-3 | (D) | 60 | (N) | 40 |
| Comparative Example 4-2 | (D) | 50 | (N) | 50 |
| Comparative Example 5-1 | (E) | 90 | (N) | 10 |
| Example 5-1 | (E) | 80 | (N) | 20 |
| Example 5-2 | (E) | 70 | (N) | 30 |
| Example 5-3 | (E) | 60 | (N) | 40 |
| Comparative Example 5-2 | (E) | 50 | (N) | 50 |
| Comparative Example 6-1 | (F) | 90 | (N) | 10 |
| Example 6-1 | (F) | 80 | (N) | 20 |
| Example 6-2 | (F) | 70 | (N) | 30 |
| Example 6-3 | (F) | 60 | (N) | 40 |
| Comparative Example 6-2 | (F) | 50 | (N) | 50 |
| Comparative Example 7-1 | (G) | 90 | (N) | 10 |
| Example 7-1 | (G) | 80 | (N) | 20 |
| Example 7-2 | (G) | 70 | (N) | 30 |
| Example 7-3 | (G) | 60 | (N) | 40 |
| Comparative Example 7-2 | (G) | 50 | (N) | 50 |

**[Table 2]**

| | Coating agent formulations | | | |
|---|---|---|---|---|
| | Component (I) | | Component (II) | |
| | Structural formula | Proportion (wt%) | Structural formula | Proportion (wt%) |
| Example 8-1 | (A) | 70 | (O) | 30 |
| Example 8-2 | (B) | 70 | (O) | 30 |
| Example 8-3 | (C) | 70 | (O) | 30 |
| Example 8-4 | (D) | 70 | (O) | 30 |
| Example 8-5 | (E) | 70 | (O) | 30 |
| Example 8-6 | (F) | 70 | (O) | 30 |
| Example 8-7 | (G) | 70 | (O) | 30 |
| Example 9-1 | (A) | 70 | (P) | 30 |
| Example 9-2 | (B) | 70 | (P) | 30 |
| Example 9-3 | (C) | 70 | (P) | 30 |
| Example 9-4 | (D) | 70 | (P) | 30 |
| Example 9-5 | (E) | 70 | (P) | 30 |
| Example 9-6 | (F) | 70 | (P) | 30 |
| Example 9-7 | (G) | 70 | (P) | 30 |
| Example 10-1 | (A) | 70 | (Q) | 30 |
| Example 10-2 | (B) | 70 | (Q) | 30 |
| Example 10-3 | (C) | 70 | (Q) | 30 |
| Example 10-4 | (D) | 70 | (Q) | 30 |
| Example 10-5 | (E) | 70 | (Q) | 30 |
| Example 10-6 | (F) | 70 | (Q) | 30 |
| Example 10-7 | (G) | 70 | (Q) | 30 |
| Example 11-1 | (A) | 70 | (R) | 30 |
| Example 11-2 | (B) | 70 | (R) | 30 |
| Example 11-3 | (C) | 70 | (R) | 30 |
| Example 11-4 | (D) | 70 | (R) | 30 |
| Example 11-5 | (E) | 70 | (R) | 30 |
| Example 11-6 | (F) | 70 | (R) | 30 |
| Example 11-7 | (G) | 70 | (R) | 30 |
| Comparative Example 8-1 | (H) | 70 | (N) | 30 |
| Comparative Example 8-2 | (I) | 70 | (O) | 30 |
| Comparative Example 8-3 | (J) | 70 | (P) | 30 |
| Comparative Example 8-4 | (K) | 70 | (Q) | 30 |
| Comparative Example 8-5 | (L) | 70 | (R) | 30 |
| Comparative Example 8-6 | (M) | 70 | (S) | 30 |
| Comparative Example 9-1 | (A) | 70 | (U) | 30 |
| Comparative Example 9-2 | (C) | 70 | (V) | 30 |
| Comparative Example 9-3 | (D) | 70 | (W) | 30 |
| Comparative Example 9-4 | (E) | 70 | (X) | 30 |
| Comparative Example 9-5 | (F) | 70 | (Y) | 30 |
| Comparative Example 9-6 | (G) | 70 | (T) | 30 |

**[Table 3]**

| | Coating agent formulations | | | |
|---|---|---|---|---|
| | Component (I) | | Component (II) | |
| | Structural formula | Proportion (wt%) | Structural formula | Proportion (wt%) |
| Comparative Example 10-1 | (A) | 100 | - | 0 |
| Comparative Example 10-2 | (B) | 100 | - | 0 |
| Comparative Example 10-3 | (C) | 100 | - | 0 |
| Comparative Example 10-4 | (D) | 100 | - | 0 |
| Comparative Example 10-5 | (E) | 100 | - | 0 |
| Comparative Example 10-6 | (F) | 100 | - | 0 |
| Comparative Example 10-7 | (G) | 100 | - | 0 |
| Comparative Example 11-1 | (H) | 100 | - | 0 |
| Comparative Example 11-2 | (I) | 100 | - | 0 |
| Comparative Example 11-3 | (J) | 100 | - | 0 |
| Comparative Example 11-4 | (K) | 100 | - | 0 |
| Comparative Example 11-5 | (L) | 100 | - | 0 |
| Comparative Example 11-6 | (M) | 100 | - | 0 |
| Comparative Example 12-1 | - | 0 | (N) | 100 |
| Comparative Example 12-2 | - | 0 | (O) | 100 |
| Comparative Example 12-3 | - | 0 | (P) | 100 |
| Comparative Example 12-4 | - | 0 | (Q) | 100 |
| Comparative Example 12-5 | - | 0 | (R) | 100 |
| Comparative Example 12-6 | - | 0 | (S) | 100 |
| Comparative Example 13-1 | - | 0 | (T) | 100 |
| Comparative Example 13-2 | - | 0 | (U) | 100 |
| Comparative Example 13-3 | - | 0 | (V) | 100 |
| Comparative Example 13-4 | - | 0 | (W) | 100 |
| Comparative Example 13-5 | - | 0 | (X) | 100 |
| Comparative Example 13-6 | - | 0 | (Y) | 100 |

### [Evaluation of initial water/oil repellency]

The glass samples with the cured film fabricated above were analyzed with contact angle meter Drop Master (manufactured by Kyowa Interface Science Co., Ltd.) to measure the contact angle of the cured film with water (water repellency) (droplet: 2 µl, temperature: 25°C, relative humidity: 50%). The results (the contact angles with water) are described in Tables 4, 5, and 6.

The contact angles with water were as high as 112° or more and good water repellency was obtained in Examples 1 to 11, Comparative Examples 1 to 7 that involved the component (I) and the component (II) in proportions outside the range of the present invention, Comparative Examples 8 and 9 in which the component (I) or the component (II) differed in structure from the component (I) or the component (II) of the present invention but their proportions were within the range of the present invention, and Comparative Examples 10 and 11 in which the component (I) was used alone. In contrast, Comparative Examples 12 and 13 in which the component (II) was used alone resulted in a contact angle with water of 111° or less.

### [Cleaning of the surface of the cured films]

The surface of the cured films formed on the glass was wet-cleaned using a urethane sponge and a neutral detergent (product name: Mama Lemon, manufactured by Lion Corporation). After the cleaning, the detergent components were rinsed off with ion-exchanged water, and water droplets remaining on the surface were removed by being blown off with dry air.

### [Evaluation of haze]

The glass samples with the cured film fabricated above were analyzed with a haze meter (NDH5000, manufactured by Nippon Denshoku Industries Co., Ltd.) in accordance with JIS K7361 to measure the haze. The haze was evaluated as "⊚" (excellent) when the measured value was less than 0.26, "○" (good) when the measured value was 0.26 or more and less than 0.36, "△" (fair) when the measured value was 0.36 or more and less than 1.00, and "×" (unacceptable) when the measured value was 1.00 or more. The haze of the plain glass without the cured film was 0.24. The evaluation was made on the glass without cleaning of the surface of the cured film (Without cleaning) and after cleaning of the surface of the cured film (After cleaning). The evaluation results are described in Tables 4, 5, and 6.

The haze of the glass without cleaning tended to be high in Comparative Examples 10 to 13 in which the component (I) or the component (II) was used alone. The haze was low in Examples 1 to 11 and Comparative Examples 1 to 9 in which the component (I) and the component (II) were mixed, and tended to decrease when the proportion of the component (II) was increased. The haze of the cleaned glass was very low in all Examples and Comparative Examples.

### [Evaluation of abrasion resistance]

### Evaluation of resistance to steel wool abrasion

The glass samples with the cured film fabricated above were tested with a reciprocating abrasion tester (Type 40, manufactured by Shinto Scientific Co., Ltd.) under the following conditions.

| | |
|---|---|
| Abrasive material: | steel wool #0000 (Bonstar) |
| Load: | 1 kgf |
| Reciprocating distance: | 40 mm |
| Reciprocating speed: | 60 reciprocations per minute |
| Total number of reciprocating cycles: | 15,000 |

The contact angle with water of the friction-abraded portion was measured in the same manner as described above every 2,500 reciprocating friction cycles, and the number of reciprocating abrasion cycles up to which the contact angle with water was 100° or more was taken as the number of steel wool abrasion resistance cycles. The abrasion resistance was evaluated as "⊚" (excellent) when the number of steel wool abrasion resistance cycles was 12,500 or more, "○" (good) when the number of steel wool abrasion resistance cycles was 7,500 or more and less than 12,500, "△" (fair) when the number of steel wool abrasion resistance cycles was 2,500 or more and less than 7,500, and "×" (unacceptable) when the number of steel wool abrasion resistance cycles was less than 2,500. The evaluation was made on the glass without cleaning of the surface of the cured film (Without cleaning) and after cleaning of the surface of the cured film (After cleaning). The evaluation results are described in Tables 4, 5, and 6.

The glass samples without cleaning performed well in all Examples and Comparative Examples. After cleaning of the glass samples, good results were obtained in Examples.

**[Table 4]**

| | Initial thickness (nm) | Contact angle with water (°) | Haze | | Steel wool abrasion resistance | |
|---|---|---|---|---|---|---|
| | | | Without cleaning | After cleaning | Without cleaning | After cleaning |
| Comparative Example 1-1 | 15 | 114 | Δ | ⊚ | ⊚ | × |
| Example 1-1 | 15 | 113 | ○ | ⊚ | ⊚ | Δ |
| Example 1-2 | 15 | 113 | ⊚ | ⊚ | ⊚ | ○ |
| Example 1-3 | 15 | 112 | ⊚ | ⊚ | ⊚ | Δ |
| Comparative Example 1-2 | 15 | 112 | ⊚ | ⊚ | ⊚ | × |
| Comparative Example 2-1 | 15 | 114 | Δ | ⊚ | ⊚ | × |
| Example 2-1 | 15 | 113 | ○ | ⊚ | ⊚ | Δ |
| Example 2-2 | 15 | 113 | ⊚ | ⊚ | ⊚ | ○ |
| Example 2-3 | 15 | 112 | ⊚ | ⊚ | ⊚ | Δ |
| Comparative Example 2-2 | 15 | 112 | ⊚ | ⊚ | ⊚ | × |
| Comparative Example 3-1 | 15 | 114 | Δ | ⊚ | ⊚ | × |
| Example 3-1 | 15 | 113 | ○ | ⊚ | ⊚ | Δ |
| Example 3-2 | 15 | 113 | ⊚ | ⊚ | ⊚ | ○ |
| Example 3-3 | 15 | 113 | ⊚ | ⊚ | ⊚ | Δ |
| Comparative Example 3-2 | 15 | 113 | ⊚ | ⊚ | ⊚ | × |
| Comparative Example 4-1 | 13 | 114 | ○ | ⊚ | ⊚ | Δ |
| Example 4-1 | 13 | 113 | ○ | ⊚ | ⊚ | ○ |
| Example 4-2 | 13 | 113 | ⊚ | ⊚ | ⊚ | ⊚ |
| Example 4-3 | 13 | 113 | ⊚ | ⊚ | ⊚ | ○ |
| Comparative Example 4-2 | 13 | 113 | ⊚ | ⊚ | ⊚ | Δ |
| Comparative Example 5-1 | 13 | 114 | ○ | ⊚ | ⊚ | Δ |
| Example 5-1 | 13 | 113 | ○ | ⊚ | ⊚ | ○ |
| Example 5-2 | 13 | 113 | ⊚ | ⊚ | ⊚ | ⊚ |
| Example 5-3 | 13 | 112 | ⊚ | ⊚ | ⊚ | ○ |
| Comparative Example 5-2 | 13 | 112 | ⊚ | ⊚ | ⊚ | Δ |
| Comparative Example 6-1 | 15 | 114 | Δ | ⊚ | ⊚ | × |
| Example 6-1 | 15 | 113 | ○ | ⊚ | ⊚ | Δ |
| Example 6-2 | 15 | 113 | ⊚ | ⊚ | ⊚ | ○ |
| Example 6-3 | 15 | 112 | ⊚ | ⊚ | ⊚ | Δ |
| Comparative Example 6-2 | 15 | 112 | ⊚ | ⊚ | ⊚ | × |
| Comparative Example 7-1 | 15 | 114 | Δ | ⊚ | ⊚ | × |
| Example 7-1 | 15 | 113 | ○ | ⊚ | ⊚ | Δ |
| Example 7-2 | 15 | 113 | ⊚ | ⊚ | ⊚ | ○ |
| Example 7-3 | 15 | 112 | ⊚ | ⊚ | ⊚ | Δ |
| Comparative Example 7-2 | 15 | 112 | ⊚ | ⊚ | ⊚ | × |

**[Table 5]**

| | Initial thickness (nm) | Contact angle with water (°) | Haze | | Steel wool abrasion resistance | |
|---|---|---|---|---|---|---|
| | | | Without cleaning | After cleaning | Without cleaning | After cleaning |
| Example 8-1 | 15 | 113 | ○ | ⊚ | ○ | Δ |
| Example 8-2 | 15 | 113 | ○ | ⊚ | ○ | Δ |
| Example 8-3 | 15 | 113 | ○ | ⊚ | ○ | Δ |
| Example 8-4 | 13 | 113 | ⊚ | ⊚ | ○ | ○ |
| Example 8-5 | 13 | 113 | ⊚ | ⊚ | ○ | ○ |
| Example 8-6 | 15 | 113 | ○ | ⊚ | ○ | Δ |
| Example 8-7 | 15 | 113 | ○ | ⊚ | ○ | Δ |
| Example 9-1 | 15 | 114 | ○ | ⊚ | ○ | Δ |
| Example 9-2 | 15 | 114 | ○ | ⊚ | ○ | Δ |
| Example 9-3 | 15 | 114 | ○ | ⊚ | ○ | Δ |
| Example 9-4 | 13 | 114 | ⊚ | ⊚ | ○ | ○ |
| Example 9-5 | 13 | 114 | ⊚ | ⊚ | ○ | ○ |
| Example 9-6 | 15 | 114 | ○ | ⊚ | ○ | Δ |
| Example 9-7 | 15 | 114 | ○ | ⊚ | ○ | Δ |
| Example 10-1 | 15 | 114 | ○ | ⊚ | ○ | Δ |
| Example 10-2 | 15 | 114 | ○ | ⊚ | ○ | Δ |
| Example 10-3 | 15 | 114 | ○ | ⊚ | ○ | Δ |
| Example 10-4 | 13 | 114 | ⊚ | ⊚ | ○ | ○ |
| Example 10-5 | 13 | 114 | ⊚ | ⊚ | ○ | ○ |
| Example 10-6 | 15 | 114 | ○ | ⊚ | ○ | Δ |
| Example 10-7 | 15 | 114 | ○ | ⊚ | ○ | Δ |
| Example 11-1 | 15 | 114 | ○ | ⊚ | Δ | Δ |
| Example 11-2 | 15 | 114 | ○ | ⊚ | Δ | Δ |
| Example 11-3 | 15 | 114 | ○ | ⊚ | Δ | Δ |
| Example 11-4 | 13 | 114 | ⊚ | ⊚ | ○ | ○ |
| Example 11-5 | 13 | 114 | ⊚ | ⊚ | ○ | ○ |
| Example 11-6 | 15 | 114 | ○ | ⊚ | Δ | Δ |
| Example 11-7 | 15 | 114 | ○ | ⊚ | Δ | Δ |
| Comparative Example 8-1 | 15 | 112 | ○ | ⊚ | Δ | × |
| Comparative Example 8-2 | 15 | 112 | ○ | ⊚ | Δ | × |
| Comparative Example 8-3 | 15 | 112 | ○ | ⊚ | Δ | × |
| Comparative Example 8-4 | 15 | 113 | ○ | ⊚ | Δ | × |
| Comparative Example 8-5 | 15 | 113 | ○ | ⊚ | Δ | × |
| Comparative Example 8-6 | 15 | 113 | ○ | ⊚ | Δ | × |
| Comparative Example 9-1 | 15 | 112 | ○ | ⊚ | ⊚ | × |
| Comparative Example 9-2 | 15 | 113 | ○ | ⊚ | ⊚ | × |
| Comparative Example 9-3 | 13 | 112 | ○ | ⊚ | ⊚ | × |
| Comparative Example 9-4 | 13 | 112 | ○ | ⊚ | ⊚ | × |
| Comparative Example 9-5 | 15 | 112 | ○ | ⊚ | ⊚ | × |
| Comparative Example 9-6 | 15 | 112 | ○ | ⊚ | ⊚ | × |

**[Table 6]**

| | Initial thickness (nm) | Contact angle with water (°) | Haze | | Steel wool abrasion resistance | |
|---|---|---|---|---|---|---|
| | | | Without cleaning | After cleaning | Without cleaning | After cleaning |
| Comparative Example 10-1 | 15 | 115 | Δ | ⊚ | ⊚ | × |
| Comparative Example 10-2 | 15 | 115 | Δ | ⊚ | ⊚ | × |
| Comparative Example 10-3 | 15 | 115 | Δ | ⊚ | ⊚ | × |
| Comparative Example 10-4 | 13 | 115 | Δ | ⊚ | ⊚ | × |
| Comparative Example 10-5 | 13 | 115 | Δ | ⊚ | ⊚ | × |
| Comparative Example 10-6 | 15 | 115 | Δ | ⊚ | ⊚ | × |
| Comparative Example 10-7 | 15 | 115 | Δ | ⊚ | ○ | × |
| Comparative Example 11-1 | 15 | 116 | ○ | ⊚ | Δ | × |
| Comparative Example 11-2 | 15 | 115 | ○ | ⊚ | Δ | × |
| Comparative Example 11-3 | 15 | 115 | ○ | ⊚ | Δ | × |
| Comparative Example 11-4 | 15 | 116 | ○ | ⊚ | Δ | × |
| Comparative Example 11-5 | 15 | 116 | ○ | ⊚ | Δ | × |
| Comparative Example 11-6 | 15 | 116 | ○ | ⊚ | Δ | × |
| Comparative Example 12-1 | 15 | 109 | Δ | ⊚ | ○ | × |
| Comparative Example 12-2 | 15 | 108 | Δ | ⊚ | Δ | × |
| Comparative Example 12-3 | 15 | 108 | Δ | ⊚ | Δ | × |
| Comparative Example 12-4 | 13 | 111 | Δ | ⊚ | ○ | × |
| Comparative Example 12-5 | 15 | 110 | Δ | ⊚ | Δ | × |
| Comparative Example 12-6 | 15 | 110 | Δ | ⊚ | ○ | × |
| Comparative Example 13-1 | 15 | 110 | Δ | ⊚ | ○ | × |
| Comparative Example 13-2 | 15 | 108 | Δ | ⊚ | ○ | × |
| Comparative Example 13-3 | 15 | 109 | Δ | ⊚ | ○ | × |
| Comparative Example 13-4 | 13 | 110 | Δ | ⊚ | ○ | × |
| Comparative Example 13-5 | 13 | 110 | Δ | ⊚ | ○ | × |
| Comparative Example 13-6 | 15 | 108 | Δ | ⊚ | ○ | × |

When the fluoropolyether group-containing polymer as the component (I) was used alone, the glass samples without cleaning showed good abrasion resistance but cleaning of the glass samples resulted in insufficient abrasion resistance. When the fluoropolyether group-containing polymer as the component (II) was used alone, the glass samples without cleaning compared unfavorably in abrasion resistance to when the fluoropolyether group-containing polymer as the component (I) was used alone, and were also unsatisfactory in abrasion resistance after the glass samples were cleaned. The glass samples showed good abrasion resistance, even after being cleaned, when the fluoropolyether group-containing polymer as the component (I) was used in combination with the fluoropolyether group-containing polymer as the component (II) that had a molecule which contained a fluorooxyalkylene group terminated with a reactive functional group at both ends and having no polar groups, in the proportions described in Examples.

## Claims

1. A fluoropolyether group-containing polymer composition comprising:
(I) at least one selected from fluoropolyether group-containing polymers represented by formulas (1) to (3) below and partial (hydrolyzed) condensates thereof: 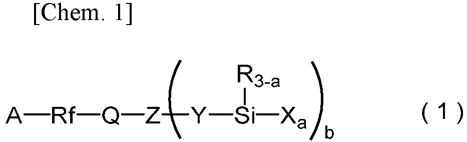 wherein A is a fluorine atom or a monovalent fluorine-containing hydrocarbon group terminated with CF₃- or CF₂H- and optionally containing an oxygen atom; Rf is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₄F₁₀O)ₜ(C₆F₁₂O)ᵤ-C_{d}F_{2d}- wherein d independently with respect to each unit is an integer of 0 to 5; p, q, r, s, t, and u are each independently an integer of 0 to 200, the sum of p, q, r, s, t, and u is an integer of 1 to 250, each of the units indicated therewith may have linear or branched, and the individual repeating units in the parentheses with p, q, r, s, t, and u are optionally bonded randomly; Q is a single bond or a divalent organic group; Z is a trivalent to octavalent group; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; a is 2 or 3 independently with respect to each unit bonded to the silicon atom; and b is an integer of 2 to 7, 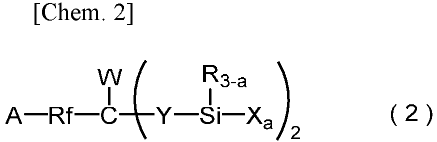 wherein A, Rf, Y, R, X, and a are the same as defined above; W is a hydrogen atom or -OV; and V is a hydrogen atom, a C1-C10 monovalent hydrocarbon group, or a monovalent group represented by formula (2a) below: 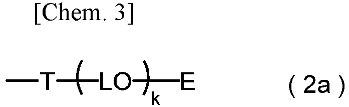 wherein T is a single bond or a divalent group; L independently at each occurrence is a C1-C4 divalent hydrocarbon group; k is an integer of 0 to 20; and E is a C1-C6 monovalent hydrocarbon group or is a monovalent hydroxyl-containing silyl group-containing group or hydrolyzable silyl group-containing group represented by formula (2b) below: 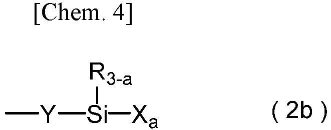 wherein Y, R, X, and a are the same as defined above, 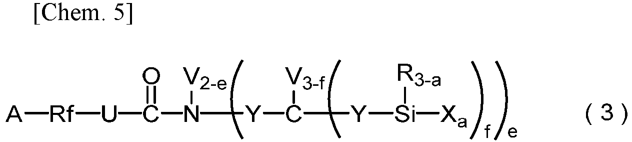 wherein A, Rf, V, Y, R, X, and a are the same as defined above; the plurality of V and the plurality of Y are each the same as or different from one another; U is a single bond or a C2-C15 divalent hydrocarbon group optionally having an ether bond; e is 1 or 2; f is an integer of 1 to 3 independently with respect to each unit bonded to the carbon atom; and the molecule contains two or more hydroxyl-containing silyl groups or hydrolyzable silyl groups; and
(II) a fluoropolyether group-containing polymer represented by formula (4) below and/or a partial (hydrolyzed) condensate thereof: 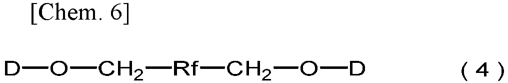 wherein Rf is the same as defined above; and D independently at each occurrence is a monovalent group terminated with a hydroxyl-containing silyl group or a hydrolyzable silyl group and having no polar groups,
the content of the component (I) in the total of the component (I) and the component (II) being 55 to 85 wt%.

2. The fluoropolyether group-containing polymer composition according to claim 1, wherein in formula (4), D is represented by formula (4a) below: 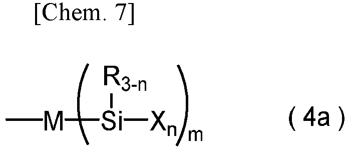 wherein R and X are the same as defined above; M is a divalent to hexavalent hydrocarbon group optionally having a silicon atom and/or a siloxane bond; m is an integer of 1 to 5; and n is an integer of 1 to 3 independently with respect to each unit bonded to the silicon atom.

3. The fluoropolyether group-containing polymer composition according to claim 1, wherein in formulas (1) to (4), Rf is selected from polymers represented by formulas below:
[Chem. 8] -C_{d'}F_{2d'}-O-(C₂F₄O)_{q'}-C_{d'}F_{2d'}- -C_{d'}F_{2d'}-O-(C₃F₆O)_{r'}-C_{d'}F_{2d'}- -C_{d'}F_{2d'}-O-(CF₂O)_{p'}(C₂F₄O)_{q'}-C_{d'}F_{2d'}- -C_{d'}F_{2d'}-O-(C₂F₄O)_{q'}(C₄F₈O)_{s'}-C_{d}F_{2d'}- -C_{d'}F_{2d'}-O-(CF₂O)_{p'}(C₂F₄O)_{q'}(C₃F₆O)_{r'}-C_{d'}F_{2d'}- -C_{d'}F_{2d'}-O-(C₂F₄O)_{q'}(C₄F₈O)_{s'}(C₆F₁₂O)_{u'}-C_{d'}F_{2d'}- -C_{d'}F_{2d'}-O-(CF₂O)_{p'}(C₂F₄O)_{q'}(C₃F₆O)_{r'}(C₅F₁₀O)_{t'}-C_{d'}F_{2d'}- -C_{d'}F_{2d'}-O-(CF₂O)_{p'}(C₂F₄O)_{q'}(C₃F₆O)_{r'}(C₄F₈O)_{s'}(C₅F₁₀O)_{t'}(C₆F₁₂O)_{u'}-C_{d'}F_{2d'}-
wherein p', q', r', s', t', and u' are each an integer of 1 to 200, the sum of p', q', r', s', t', and u' is 10 to 250, and each of the units indicated therewith has linear; the individual repeating units in the parentheses with p', q', r', s', t', and u' are optionally bonded randomly; and d' independently with respect to each unit is an integer of 0 to 5 and each of these units has linear.

4. The fluoropolyether group-containing polymer composition according to claim 1, wherein in formula (1), Q is a C1-C15 unsubstituted or substituted, divalent hydrocarbon group optionally containing one or more bonds selected from the group consisting of amide bonds, ether bonds, ester bonds, sulfide bonds, urethane bonds, siloxane bonds, triazine bonds, diorganosilylene groups, silalkylene bonds, and silarylene bonds; and Z is a trivalent to octavalent group selected from a silicon atom, a nitrogen atom, a trivalent isocyanuric group, a trivalent triazine ring-containing group, and a trivalent to octavalent organopolysiloxane residue having a siloxane bond.

5. The fluoropolyether group-containing polymer composition according to claim 1, wherein in formula (2a), T is a single bond or is a C2-C20 divalent hydrocarbon group optionally containing one or more bonds selected from the group consisting of silicon atoms, siloxane bonds, silalkylene bonds, silarylene bonds, and diorganosilylene groups, a divalent siloxane bond, a silalkylene group, or a diorganosilylene group.

6. The fluoropolyether group-containing polymer composition according to claim 1, wherein in formulas (1), (2), (2b), and (3), X independently at each occurrence is a group selected from the group consisting of a hydroxyl group, a C1-C10 alkoxy group, a C2-C10 alkoxy-substituted alkoxy group, a C2-C10 acyloxy group, a C2-C10 alkenyloxy group, and a halogen group.

7. The fluoropolyether group-containing polymer composition according to claim 1, wherein the fluoropolyether group-containing polymer represented by formula (1) is selected from polymers represented by formulas below: 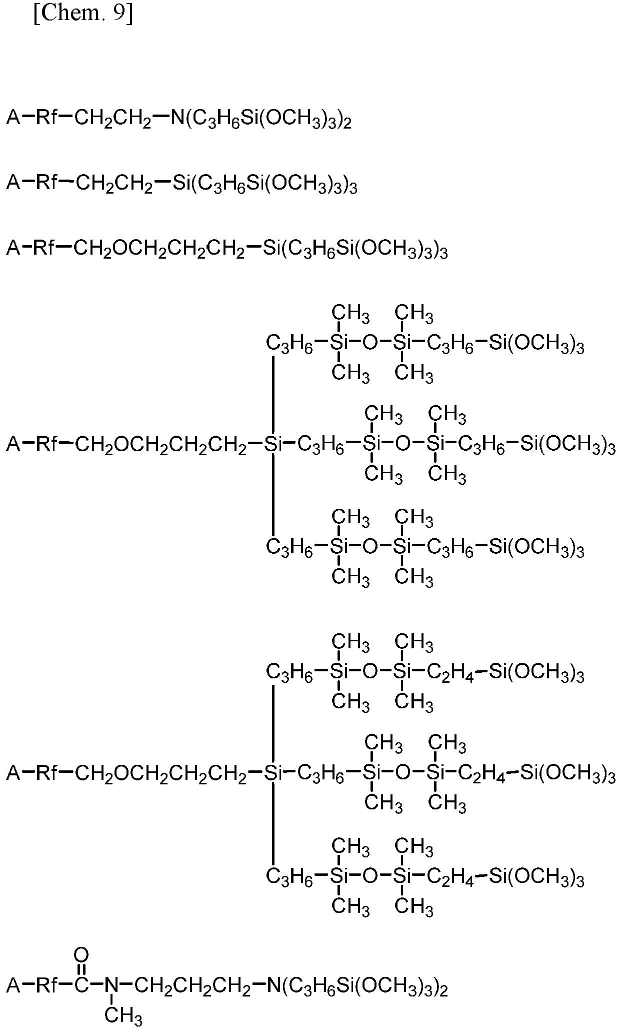 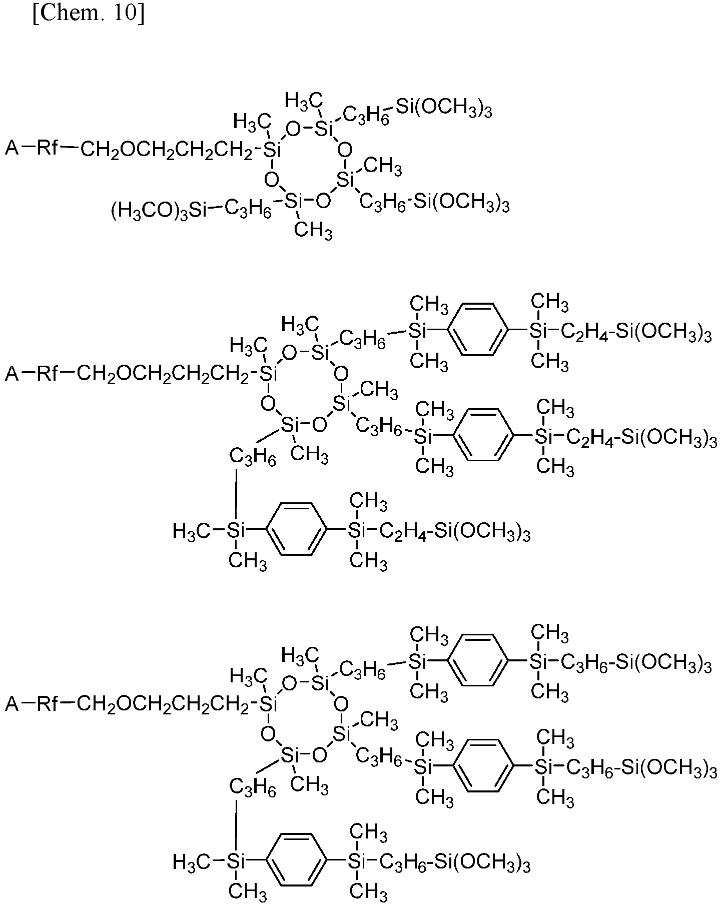 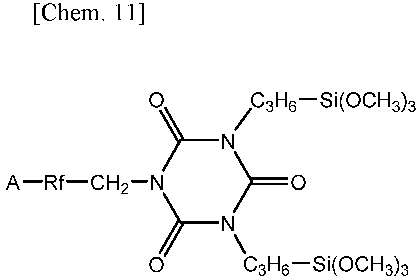 wherein A and Rf are the same as defined hereinabove.

8. The fluoropolyether group-containing polymer composition according to claim 1, wherein the fluoropolyether group-containing polymer represented by formula (2) is selected from polymers represented by formulas below: 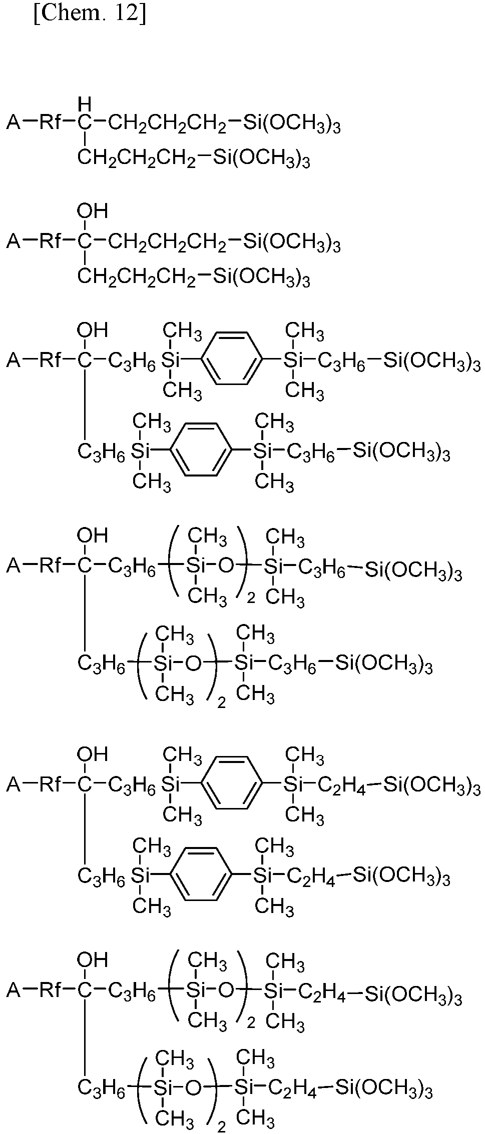 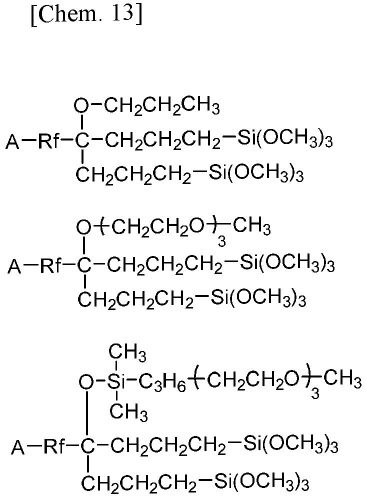 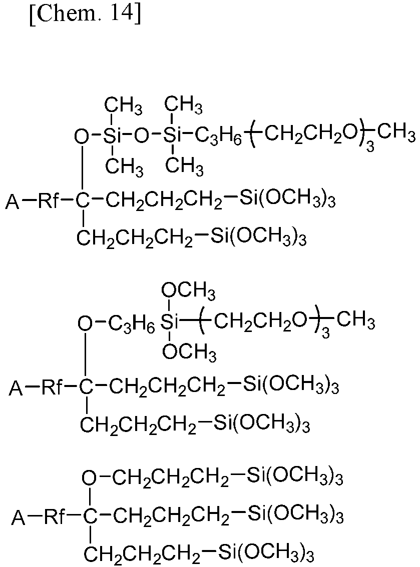 wherein A and Rf are the same as defined hereinabove.

9. The fluoropolyether group-containing polymer composition according to claim 1, wherein the fluoropolyether group-containing polymer represented by formula (3) is selected from polymers represented by formulas below: 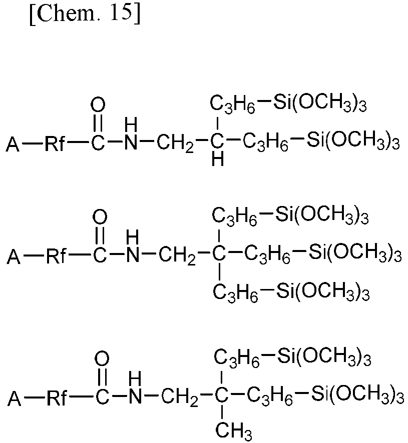 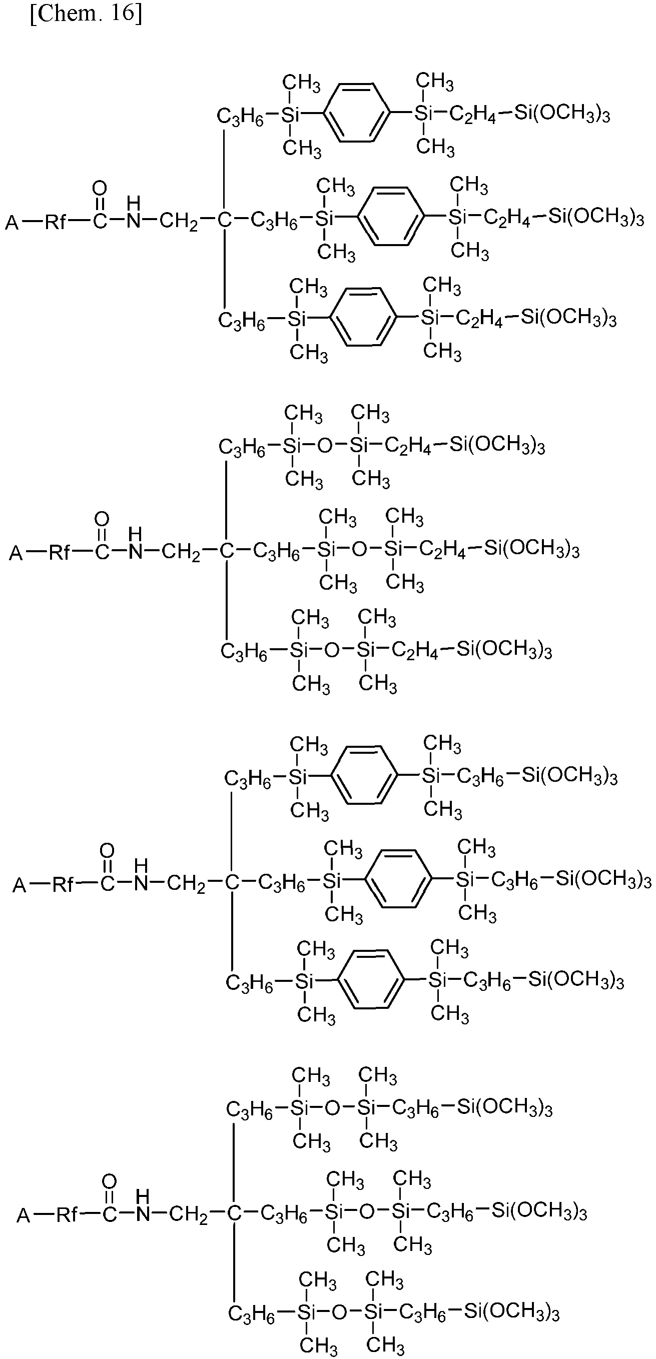 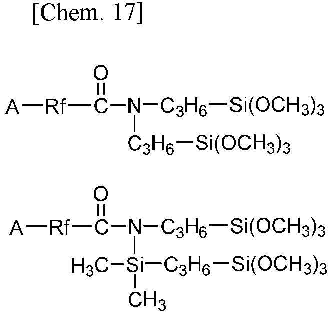 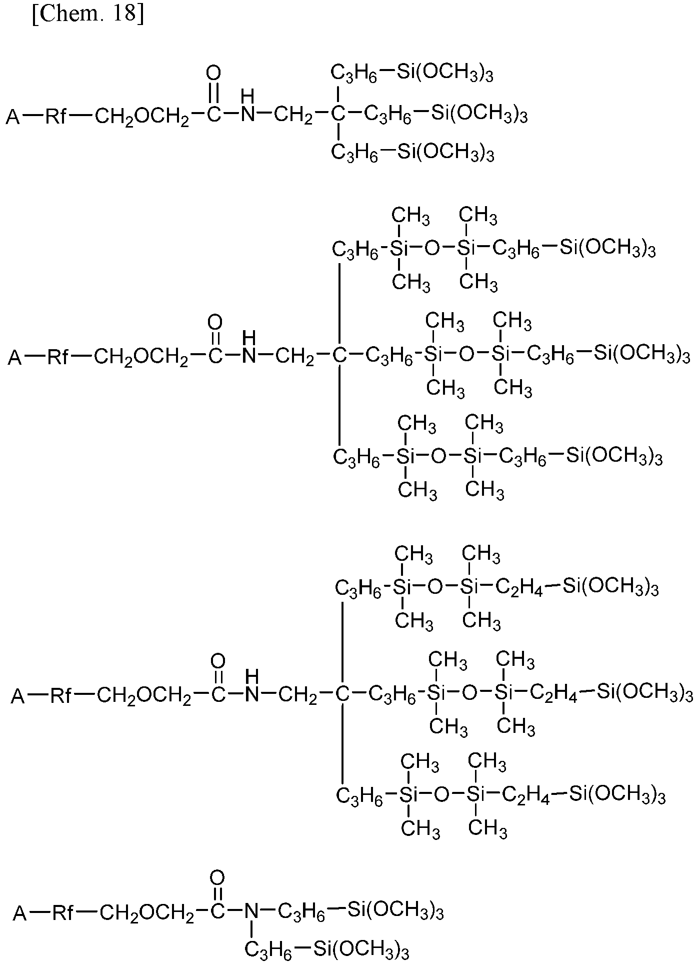 wherein A and Rf are the same as defined hereinabove.

10. The fluoropolyether group-containing polymer composition according to claim 1, wherein the fluoropolyether group-containing polymer represented by formula (4) is selected from polymers represented by formulas below: 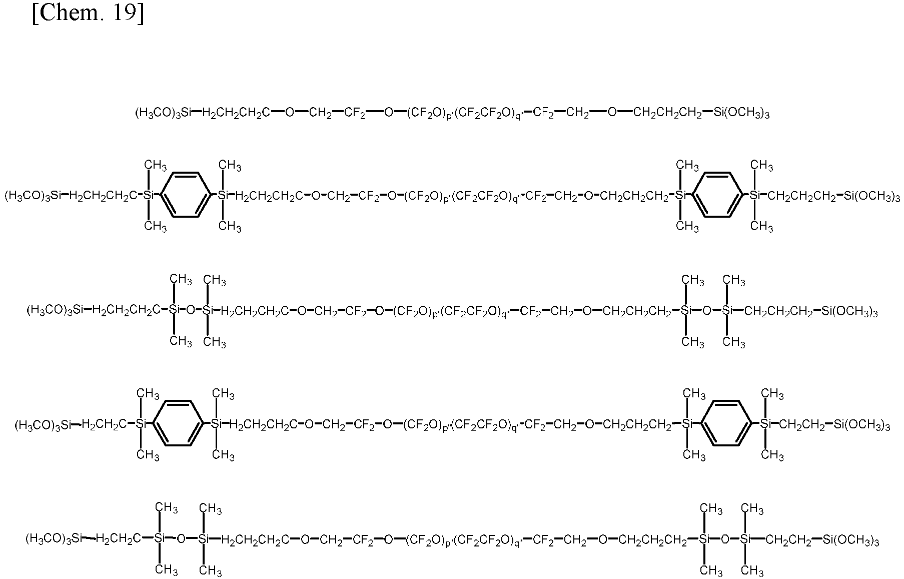 wherein p" and q" are each an integer of 1 to 199; and the sum of p" and q" is 10 to 200.

11. A coating agent comprising the fluoropolyether group-containing polymer composition of any one of claims 1 to 10.

12. An article having a layer comprising a cured product of the coating agent of claim 11.

13. The article according to claim 12, wherein the surface resists 2,500 or more abrasion resistance cycles under test conditions described below:
[Abrasion resistance test conditions]
Evaluation of resistance to steel wool abrasion using a reciprocating abrasion tester
| | |
|---|---|
| Abrasive material: | steel wool #0000 (Bonstar) |
| Load: | 1 kgf |
| Reciprocating distance: | 40 mm |
| Reciprocating speed: | 60 reciprocations per minute |
| Test environment conditions: | 25°C, 50% relative humidity |
The contact angle with water of a friction-abraded portion is measured every 2,500 reciprocating friction cycles, and the number of reciprocating abrasion cycles up to which the contact angle with water is 100 degrees or more is taken as the number of abrasion resistance cycles.

14. A method for modifying a surface of an article, comprising a step of applying a coating agent comprising the fluoropolyether group-containing polymer composition of any one of claims 1 to 10 to part or the whole of the surface of an article by a dry process or a wet process, and curing the coating agent to form a layer.
